# EUROPEAN PATENT SPECIFICATION

(11) **EP 3 084 582 B1**
(45) Date of publication and mention of the grant of the patent: **26.06.2019**
(21) Application number: 14821978.5
(22) Date of filing: 10.12.2014
(51) Int. Cl.: G06F 3/0488, G06F 17/24

(54) **TOUCH/GESTURE-ENABLED INTERACTION WITH ELECTRONIC SPREADSHEETS**
BERÜHRUNGSAKTIVIERT INTERAKTION MIT TABELLENKALKULATIONSPROGRAMM
INTERACTION TACTILE AVEC UN TABLEUR ELECTRONIQUE

(30) Priority: 17.12.2013 US 201314108847
(43) Date of publication of application: 26.10.2016
(73) Proprietor: Microsoft Technology Licensing, LLC, Redmond, WA 98052-6399 (US)
(72) Inventor: CAMPBELL, John, Redmond, WA 98052-6399 (US); RADAKOVITZ, Samuel Chow, Redmond, WA 98052-6399 (US); ALBERT, Uhl, Redmond, WA 98052-6399 (US); PATTERSON, Eric W., Redmond, WA 98052-6399 (US); OTERO, Carlos Augusto, Redmond, WA 98052-6399 (US)
(74) Representative: Grünecker Patent- und Rechtsanwälte PartG mbB
(86) International application number: PCT/US2014/069420
(87) International publication number: WO 2015/094827

(56) References cited:
- US-A1- 2010 083 089
- US-A1- 2012 180 002
- "Chapter 16: Creating Charts" In: Sherry Kinkoph Gunter, et.al.: "Microsoft Office 2008 for Mac Bible", April 2009 (2009-04), Wiley, Indianapolis, Indiana, US, XP002738393, ISBN: 978-0-470-38315-5 pages 443-478, page 443, para. 1, 2; page 455, points 1-4, last para.; page 456, Fig.16.15; page 456, 1st para.; page 457, Fig.16.16
- Albert Napier: "Microsoft? Excel? 2013: Working with Formulas and Functions Using a Touch Screen", , 5 October 2013 (2013-10-05), pages 1-55, XP055225208, ISBN: 978-1-940079-03-5 Retrieved from the Internet: URL:http://038e910.netsolhost.com/wordpres s/wp-content/uploads/2015/01/wwff_T_2013-L esson-1-Sample-Using-Touch-Sample-and-Touc h-Screen-Appendix.pdf [retrieved on 2015-11-02]

## Description

### BACKGROUND

With the advent of computers and computer software, users have become accustomed to receiving, entering, editing, filtering and otherwise utilizing data of various types. Spreadsheet applications have become very popular for allowing users to handle large amounts of data and for performing many different computations and data organization functions. Spreadsheet application users may enter and manipulate large amounts of data with the help of a variety of mathematical and data organizing formulas and functions.

Navigation through large spreadsheets or spreadsheet workbooks containing many spreadsheets can often be difficult owing to large numbers of columns and rows of data including one or more different spreadsheet objects where such large spreadsheets exceed the display space of a computing device in use for displaying the spreadsheet workbooks or individual spreadsheets. Navigation, finding content, or interacting with various objects in such spreadsheets can be difficult using conventional user interaction systems, such as a mouse and keyboard, but such activities are even more difficult when a touch device is in use, and particularly where the touch device affords limited screen space.

It is with respect to these and other considerations that the present invention has been made.

"Chapter 16: Creating Charts", Sherry Kinkoph Gunter, et.al., Microsoft Office 2008 for Mac Bible, Indianapolis, Indiana, US, Wiley, pages 443-478 relates to the Microsoft Office 2008 for Mac Bible. To apply any chart to your data, just click the chart you want on the Charts tab. Excel immediately creates a chart and places it on the worksheet as a floating object, much like a graphic or picture. Whenever you select a chart, the Formatting Palette displays options specifically geared to charts.

US 2012/180002 A1 relates to natural input for spreadsheet actions. A user selects data and then draws a chart gesture to change a view of the selected data. When the user has completed the chart gesture, a pie chart is displayed.

Albert Napier: "Microsoft Excel 2013: Working with Formulas and Functions Using a Touch Screen", 5 October 2013, pages 1-55, relates to Microsoft Excel 2013: Working with Formulas and Functions Using a Touch Screen. Observe the additional space surrounding the buttons on the Quick Access Toolbar, the Ribbon tabs, and Ribbon buttons. The Name Box arrow can be tapped to view a list of available range names; then tap the desired range name in the list to select it. A finger-thumb or two-finger pinch gesture is used to zoom a worksheet in and out. For example, the worksheet can be quickly zoomed by pinching 'out' to enlarge your view of cells for data entry; then pinch 'in' to see the active worksheet area.

### SUMMARY

It is the object of the present invention to improve touch interaction for navigating large spreadsheet documents and to reduce computational efforts involved with the touch navigation.

This object is solved by the subject matter of the independent claims.

Preferred embodiments are defined by the dependent claims.

This summary is provided to introduce a selection of concepts in a simplified form that are further described below in the detailed description. This summary is not intended to identify key features or essential features of the claimed subject matter, nor is it intended as an aid in determining the scope of the claimed subject matter.

Embodiments of the present invention solve the above and other problems by providing touch-enabled interaction with electronic spreadsheets. According to embodiments, zoom navigation (also referred to as semantic zoom navigation) is provided. Instead of optically zooming a spreadsheet document or content contained therein (i.e., where a displayed content item is made larger or smaller in response to zooming), the result of the zoom navigation described herein is enhanced/improved navigation through the spreadsheet application user interface and/or spreadsheet content. As described below, such zoom navigation allows for navigation through various levels of spreadsheet application functionality (where contextual functionality and content are surfaced during navigation) and navigation through various levels of spreadsheet content.

According to examples of the present invention, a variety of device touch and/or gesture interactions are provided for allowing a user to interact with a spreadsheet application and/or spreadsheet document. Navigation of, finding content in, and interacting with spreadsheets and spreadsheet objects is enhanced via a variety of touch/gesture interactions that allow users to more fully utilize and appreciate spreadsheet content. According to examples of the present invention, spreadsheets may be grouped or stacked for enhanced sheet navigation. Large spreadsheets may be zoomed, and particular spreadsheet objects may be surfaced. Named objects contained in one or more spreadsheets may be surfaced. Previous spreadsheet interactions, for example, most recent changes and comments, may be exposed. An enhanced "find" mode may be provided for exposing a found data item across one or more spreadsheets. Formula dependencies across one or more spreadsheets may be provided. Touch/gesture enabled "drill down" may provide exposure of data behind or external to a given spreadsheet or spreadsheet object. In addition, touchable areas in a spreadsheet may be enhanced for improving touch/gesture interaction efficiency.

The details of one or more embodiments are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

The accompanying drawings, which are incorporated in and constitute a part of this disclosure, illustrate examples of the present invention.
Fig. 1 illustrates a system architecture in which embodiments of the present invention may be practiced.
Figs. 2A-2F illustrate various touch/gesture-enabled interactions with an electronic spreadsheet document.
Fig. 3 illustrates touch/gesture-enabled interaction with an electronic spreadsheet document for navigating between spreadsheet application modes.
Fig. 4 illustrates a "stacking" or grouping of a plurality of spreadsheets in a spreadsheet application user interface.
Fig. 5 illustrates a "stacking" or grouping of a plurality of spreadsheets in a spreadsheet application user interface and illustrates information such as comments associated with one or more electronic spreadsheet documents.
Fig. 6 illustrates touch-enabled interaction with a large spreadsheet for exposing one or more content items in the large spreadsheet.
Fig. 7 illustrates exposure of one or more named objects contained in one or more electronic spreadsheet documents.
Fig. 8 illustrates exposure of and mapping of interacted-with portions or objects of a plurality of electronic spreadsheet documents.
Fig. 9A illustrates found content items in an electronic spreadsheet document.
Fig. 9B illustrates found content items in a plurality of electronic spreadsheet documents.
Fig. 10A illustrates a mapping of formula, function or data dependencies across one or more electronic spreadsheets.
Fig. 10B illustrates a mapping of formula, function or data dependencies across one or more electronic spreadsheets.
Fig. 11 illustrates a "drill down" into a spreadsheet object for exposing data or other objects related to an interacted-with spreadsheet object.
Fig. 12 illustrates a "drill down" into a spreadsheet object for exposing data or other objects related to an interacted-with spreadsheet object.
Fig. 13 illustrates a notched mode for enhancing touch/gesture interaction with a spreadsheet object.
Fig. 14 is a flow chart illustrating a method for interacting with an electronic spreadsheet document.
Fig. 15 is a simplified block diagram illustrating example physical components of a computing device with which embodiments of the invention may be practiced.
Figs. 16A and 16B are simplified block diagrams of a mobile computing device with which embodiments of the present invention may be practiced.
Fig. 17 is a simplified block diagram of a distributed computing system in which embodiments of the present invention may be practiced.

### DETAILED DESCRIPTION

As briefly described above, examples of the present invention are directed to touch/gesture-enabled interaction with electronic spreadsheet application user interfaces and electronic spreadsheet application documents. As described in detail below, according to examples of the present invention, enhanced navigation of an electronic spreadsheet workbook comprised of a plurality of individual spreadsheets, an individual electronic spreadsheet document, and/or one or more objects contained in electronic spreadsheet documents (hereinafter referred to collectively as a spreadsheet or spreadsheet document) is provided. A touch/gesture-enabled zoom navigation allows a user to navigate through various spreadsheet application user interface and functionality modes and through spreadsheet content in various directions (e.g., hierarchically, higher level to lower level, lower level to higher level, etc.) in response to one or more user touches and/or gestures.

Using such a zoom navigation (also referred to as semantic zoom navigation), instead of optically zooming a spreadsheet document or content contained therein (i.e., where a displayed content item is made larger or smaller in response to zooming), the result of the zoom navigation described herein is enhanced/improved navigation through the spreadsheet application user interface and/or spreadsheet content. For example, a zoom navigation of a given spreadsheet workbook may include receiving a touch/gesture on a displayed spreadsheet workbook icon, folder, or other graphical indication resulting in a display of a set of thumbnail representations of a variety of sheets comprising the zoomed workbook. A subsequent touch/gesture on one of the thumbnail representations may result in a launch and/or display of the corresponding spreadsheet file or workbook. A subsequent touch/gesture on the displayed spreadsheet may result in a display of one or more thumbnail representations of one or more objects (e.g., tables, charts, images, etc.) contained in the spreadsheet. A subsequent touch/gesture on one of the spreadsheet objects may result in a display of data and/or objects associated with the interacted-with object. In addition to navigation to and from different content levels touch/gesture-enabled navigation through spreadsheet modes associated with different spreadsheet functions is also provided. Thus, instead of conventional navigation requiring the selection of a button, control or document location, navigation through a spreadsheet document and associated functionality may be accomplished by interacting with the document via one or more touch/gesture interactions.

The following detailed description refers to the accompanying drawings. Wherever possible, the same reference numbers are used in the drawings and the following description to refer to the same or similar elements. While embodiments of the invention may be described, modifications, adaptations, and other implementations are possible. For example, substitutions, additions, or modifications may be made to the elements illustrated in the drawings, and the methods described may be modified by substituting, reordering, or adding stages to the disclosed methods. Accordingly, the following detailed description does not limit the invention but, instead, the proper scope of the invention is defined by the appended claims.

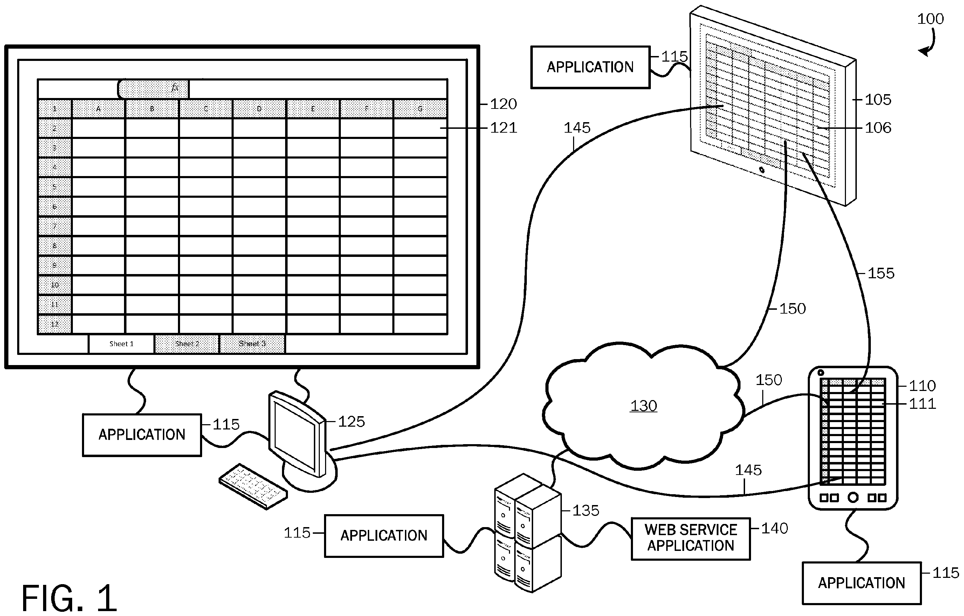

Fig. 1 illustrates a system architecture in which embodiments of the present invention may be practiced. In Fig. 1, a variety of computing devices are illustrated with which embodiments of the present invention may be practiced on individual computing devices or in a collaborative work session. For example, a small-form smartphone or other handheld computing device 110 is illustrated having a display surface 111 and being associated with an application 115. A larger form tablet-style computing device 105 having a display surface 106 and an associated spreadsheet application 115 is illustrated. A large display device 120 having a display surface 121 is illustrated being associated with a computer 125 and a spreadsheet application 115.

As should be appreciated, the computing devices 105, 110, 120, 125 are for purposes of illustration only and are not exhaustive of the various types of computing devices that may be used in accordance with embodiments of the present invention. For example, while the display device 120 is illustrated as a display unit with an associated computing device 125, the large-form display device 120 may operate as an integrated display/computing device that may be used for any suitable use from large-scale display uses, for example, in a conference room, to personal computing, as desired. According to examples of the present invention, each of the computing devices illustrated in Fig. 1 may receive input through a variety of suitable means including touch or gesture input, keyboard input, mouse input, voice command input, electronic inking input, eye tracking, and the like.

Referring still to Fig. 1, the software applications 115 illustrated in association with each of the computing devices 105, 110, 120, 125 are illustrative of any application having sufficient computer executable instructions for enabling embodiments of the present invention as described herein. For example, applications 115 may include spreadsheet applications, word processing applications, slide presentation applications, electronic mail applications, notes taking applications, desktop publishing applications, and the like. An example spreadsheet application 115 includes EXCEL manufactured by Microsoft Corporation of Redmond, Washington. As should be appreciated, this example spreadsheet application is but one example of the many applications suitable for enabling embodiments described herein may be used.

Each of the computing devices 105, 110, 120, 125 may operate in a collaborative work environment through one or more wired or wireless data connections 145, 150, 155. That is, each of the computing devices may communicate with each other through wired or wireless data lines via direct connection, or via connection through a distributed computing network 130 such as the Internet or an intranet.

According to examples of the present invention, application functionality associated with each of the computing devices 105, 110, 120, 125 may operate according to one or more variations. For example, each application 115 may be a fully functional "thick" client application having all application functionality including the ability to send and receive data to and from other applications 115 operating on other computing devices in the collaborative work session. Each such application not only has its native functionality, for example, spreadsheet functionality, but according to examples of the present invention, each such application also contains sufficient computer executable instructions for allowing each application to operate as a control application for controlling information sent from a control device for receipt by an endpoint display device in a collaborative work environment. Likewise, each such application has sufficient computer executable instructions for allowing the application to operate as an endpoint display device for receiving control functions from another computing device.

According to another example of the present invention, the computing devices 105, 110, 120, 125 may communicate via a distributed computing network 130, for example, the Internet. Referring still to Fig. 1, the computing device 135 is illustrative of an Internet-based or "cloud-based" server computer on which may be operated one or more web services applications 140 for providing a collaborative work session, as described herein. According to this example of the present invention, each of the devices 105, 110, 120, 125 may operate as thin client systems, and collaborative communication between the devices may be operated at the direction of the web services application 140 operated at a remote site. According to this example of the present invention, an application 115 may operate at the remote server 135 wherein each of the devices 105, 110, 120, 125 may access and receive the functionality described herein via a remote service from the server based application 115, for example, via the web services application 140.

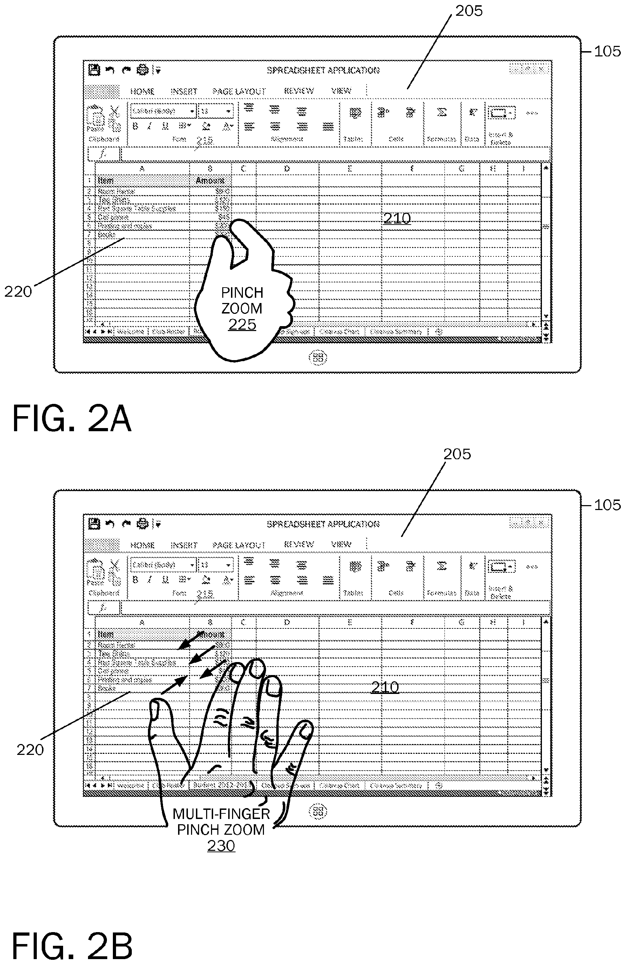

In Figs. 2A through 2F, an example spreadsheet application user interface 205 and an example spreadsheet application document 210 are illustrated on an example touch-enabled tablet-style computing device 105. As should be appreciated, the illustrated computing device 105 is illustrative of any computing device on which the spreadsheet application user interface and spreadsheet application document may be displayed and utilized, for example, any of the computing devices 105, 110, 120, 125 described above with reference to Fig. 1. According to examples of the present invention described herein, user interaction with the electronic spreadsheet application user interface 205 and spreadsheet document 210 may be accomplished via a variety of interaction methods including keyboard entry, mouse entry, touch/gesture entry, voice command, eye tracking, thin air gesture entry, electronic inking entry, and combinations thereof.

The electronic spreadsheet user interface 205 and electronic spreadsheet document 210 are for purposes of example and illustration only and are not exhaustive of a variety of types of documents that may contain data for which embodiments of the present invention may be utilized. For example, while embodiments described here discuss interaction with electronic spreadsheets in terms of their operation and association with a spreadsheet application, other software applications and associated documents, for example, word processing documents, slide presentation documents, electronic mail documents, notes documents, and the like that are capable of receiving, displaying and allowing operation of spreadsheet content may be utilized in accordance with examples of the present invention. For example, interaction with electronic spreadsheets, as described herein, may be utilized with respect to spreadsheet content embedded in or referenced in another type of document, for example, a word processing document into which an electronic spreadsheet or portion of an electronic spreadsheet has been embedded for use in association with other content contained in the word processing document.

Referring still to Figs. 2A-2F, the example spreadsheet user interface 205 includes a variety of selectable buttons and controls for obtaining and applying functionalities of the underlying spreadsheet application 115 to one or more data items 220 contained in the spreadsheet grid or canvas. A formula/function bar 215 is provided in which one or more spreadsheet cell references, mathematical operators, spreadsheet syntax characters, formulas, functions and the like may be entered and/or disposed for generating and utilizing one or more formulas or functions in association with data contained in the spreadsheet document 210. A variety of data items 220 are illustrated showing a variety of data names in a column A of the document 210 and showing a variety of numeric data items in a column B of the spreadsheet document 210. As should be appreciated, the data illustrated in Figs. 2A-2F is for purposes of example only and is not exhaustive of the vast amounts of data that may be organized in a spreadsheet or other document and for which embodiments of the present invention may be utilized.

As described above, according to examples of the present invention, a zoom navigation (also referred to as semantic zoom) is provided for allowing touch/gesture-enabled navigation through various content levels of a given spreadsheet document or through various functionality modes provided by a spreadsheet application 115 in association with a spreadsheet document. Referring still to Figs. 2A-2F, a variety of touch/gesture user interactions are illustrated and described with which touch/gesture navigation described herein may be accomplished. According to examples of the present invention, the terms touch and gesture may be used interchangeably to represent physical touches, thin air gestures, voice gestures, eye tracking gestures, and the like. Referring to Fig. 2A, a pinch zoom 225 is illustrated wherein a user pinches a display surface of the device 105 in association with a spreadsheet content item or functionality for navigating to a different navigation level. For example, a pinch zoom 225 on a data item 220 contained in the example spreadsheet may cause navigation to an underlying spreadsheet object or data item on which the interacted-with content item is based. Similarly, a pinch zoom gesture on a spreadsheet functionality button or control may cause navigation to a lower level spreadsheet function. For example, a pinch zoom 225 interaction with a formula button may cause a display of a variety of available formulas for use in association with the example spreadsheet.

As should be appreciated, another touch/gesture, for example, a reverse pinch zoom, wherein the user contacts the display surface, followed by a spreading of the finger and thumb may cause a reverse of the previously described navigation to a higher level. For example, a reverse pinch zoom on a data item in the example spreadsheet may cause a zoom out to a spreadsheet object comprising, including, or based on the interacted-with data item. Thus, such a pinch zoom interaction 225 may be used for readily zooming upward or downward through various content and/or functionality levels contained in or associated with a given spreadsheet. According to examples of the present invention, such pinch zoom gestures may result in variations on the associated navigation based on a speed of the applied pinch zoom. For example, a quick pinch zoom or quick pinch reverse zoom may cause navigation directly to a highest or lowest navigation level for either spreadsheet content or for spreadsheet application mode/functionality.

Referring to Fig. 2B, a multi-finger pinch zoom interaction 230 is illustrated. According to one example of the present invention, a multi-finger pinch zoom interaction may be used for automatically zooming directly to a given spreadsheet mode, for example, formatting mode, formula mode, table creation mode, comments mode, and the like, or the multi-finger pinch zoom interaction 230 may be used for automatically navigating to a highest or lowest content level of a given spreadsheet document. For example, a multi-finger pinch zoom interaction 230 may be used for automatically navigating from a display of a given spreadsheet document to a listing or graphical representation of various spreadsheet objects, for example, tables, charts, and the like, comprising the spreadsheet document.

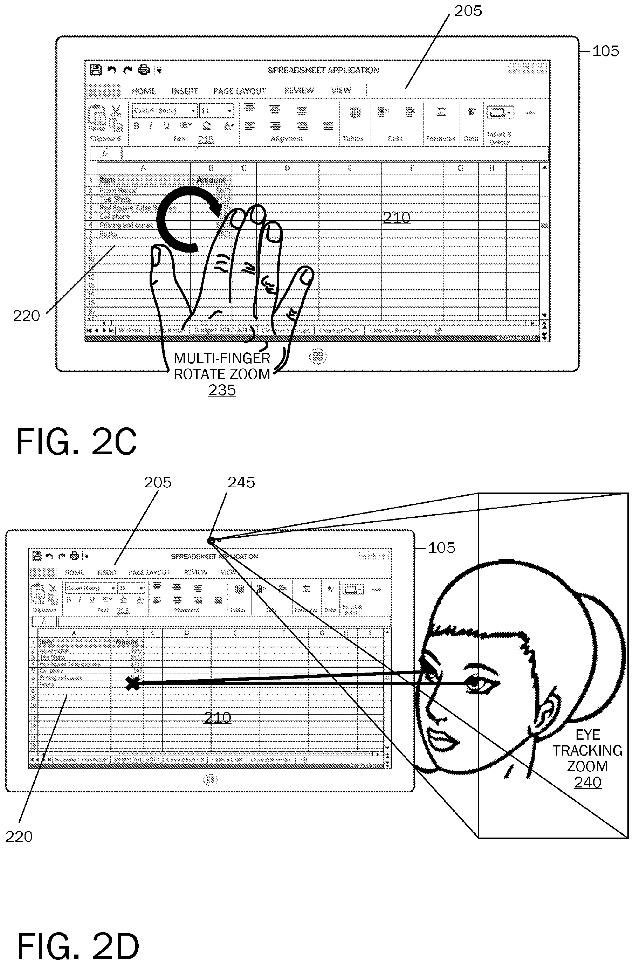

Referring now to Fig. 2C, a multi-finger rotate zoom interaction 235 is illustrated. According to this interaction, a user may touch the display surface of the device 105 followed by a rotation movement for automatically navigating between various spreadsheet content levels and between various spreadsheet application functionality modes. For example, rotating the fingers to the right or clockwise may cause navigation to a lower content or functionality mode level, and rotation of the fingers to the left or counterclockwise may cause navigation to a higher content or functionality mode level. In addition, such a multi-finger rotate zoom gesture may be utilized for automatically entering a given mode. For example, in response to a multi-finger rotate zoom gesture, a display of a set of thumbnail representations of one or more spreadsheets comprising a spreadsheet workbook may be provided.

Referring now to Fig. 2D, an eye tracking interaction 240 is illustrated and may be utilized for navigating through various content and/or functionality mode levels. According to this example of the present invention, a camera 245 provided by the device 105 may monitor eye movement of a user, and eye movement of the user may be utilized for zoom navigation of a spreadsheet document and associated spreadsheet functionality, as described herein. For example, in response to a sustained eye focus on a given spreadsheet object, followed by a right-to-left eye movement, navigation to a lower data level associated with the focused-on spreadsheet content item may be accomplished. For another example, in response to a rotation of the eyes in a clockwise motion, navigation to a lower content and/or functionality mode level may be accomplished, while eye rotation in a counterclockwise motion may result in a reverse navigation to a higher content and/or functionality mode or level.

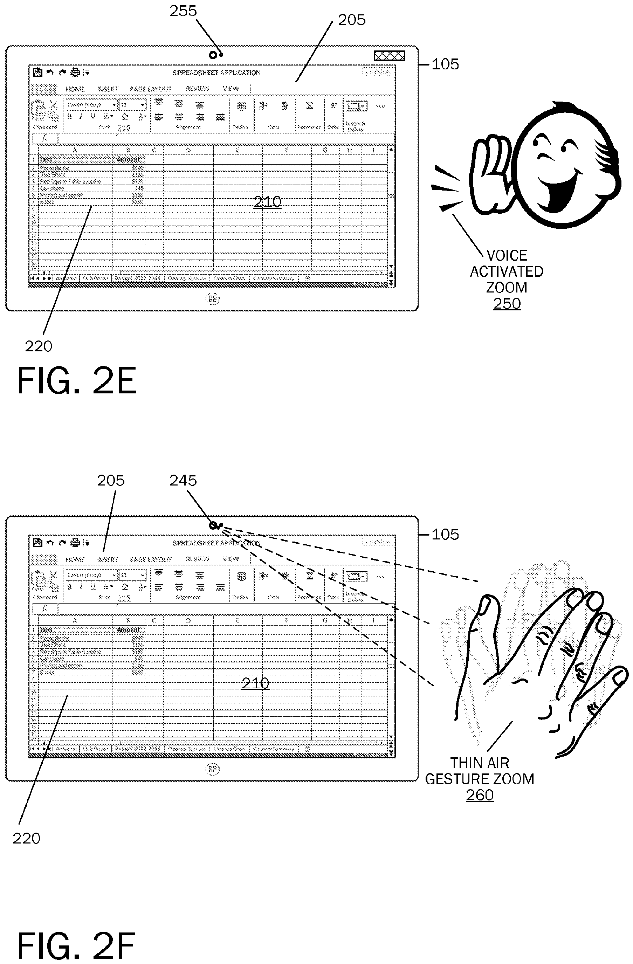

Referring to Fig. 2E, a voice activated zoom interaction 250 is illustrated wherein a microphone 255 of the device 105, in association with a speech recognition and interpretation module associated with the device 105 or application 115, receives voice commands, followed by an interpretation of the voice commands as navigation commands for navigating spreadsheet content and/or functionality modes, as described herein. For example, in response to a command such as "show me a listing of spreadsheets making up the displayed workbook," a listing of thumbnail representations of one or more spreadsheets making up a given spreadsheet workbook would be automatically displayed. Likewise, a command such as "display formatting functions" may cause an automatic display of spreadsheet functionality operative for applying one or more formatting attributes to a given spreadsheet document.

Referring to Fig. 2F, a thin air gesture zoom interaction 260 is illustrated wherein a camera 245 of the device 105 detects thin air gestures, for example, the waving of a hand or finger, and wherein gesture functionality associated with the device 105 or application 115 interprets the received gestures as navigation commands for navigating through various content and/or functionality mode levels, as described herein. For example, a hand wave from the right-to-left may cause navigation from one content level to a second content level, for example, from a displayed spreadsheet to a displayed spreadsheet object. Similarly, another thin air gesture, for example, a circling of a finger may be interpreted as a navigation command for navigating from a highest to a lowest content level, or for navigating from one functionality mode a next functionality mode, as described herein.

As should be appreciated, the interactions and navigation examples described above with reference to Figs. 2A through 2F are for purposes of example and illustration only and are not limiting of the exhaustive numbers of touch/gesture interactions that may be used in accordance with embodiments of the present invention. That is, an almost limitless number of touch/gesture interactions may be utilized in association with various navigation functions. For example, a double tap of a user finger on a display surface of the device 105 may cause navigation from one level to another. For another example, a single tap followed by a finger swipe may cause navigation from one level or mode to another. For another example, a finger tap followed by a thin air gesture may cause yet another type of content and/or functionality mode navigation.

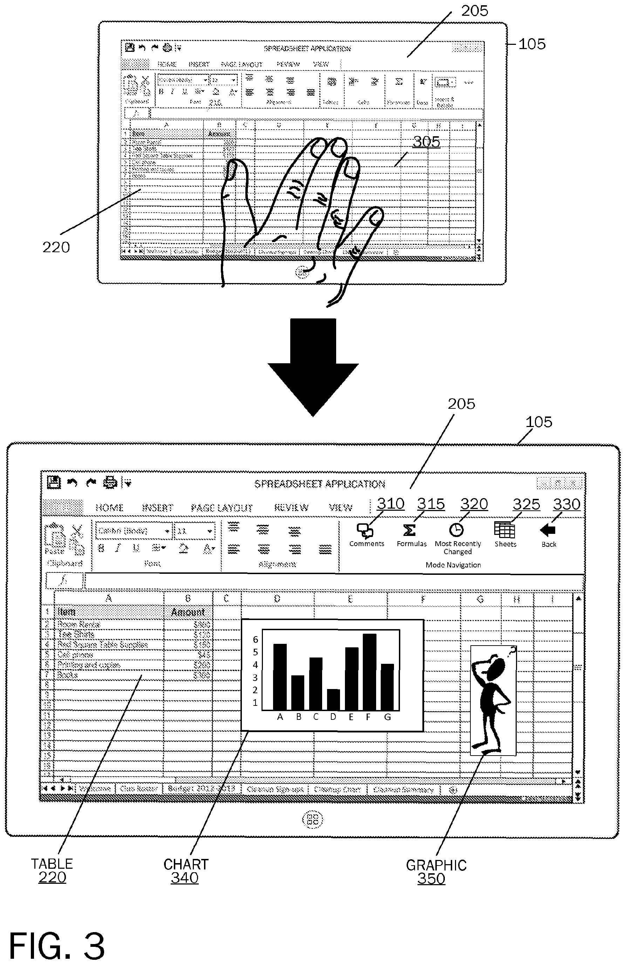

Figs. 3 through 13 provide illustrations and examples of touch/gesture interaction navigation through various levels of spreadsheet content and through various levels of spreadsheet functionality modes according to embodiments of the present invention. Referring to Fig. 3, a multi-finger pinch zoom interaction is illustrated in association with a spreadsheet document 305 displayed in association with a spreadsheet application user interface 205 displayed on a touch/gesture-enabled computing device 105. As illustrated in the lower portion of Fig. 3, after the user performs the illustrated gesture interaction with the spreadsheet 305, the spreadsheet is navigated to a lower level wherein a chart 340 and a graphic 350 are surfaced and displayed in association with the data 220 that was displayed in the higher level display of the spreadsheet 305, as illustrated in the upper portion of Fig. 3.

In addition, referring to the spreadsheet application user interface 205, in response to the gesture interaction with the spreadsheet 305, a variety of user interface functions 310, 315, 320, 325, 330 are exposed for providing a different mode of spreadsheet application functionality in association with the navigated-to spreadsheet content. Thus, the zoom navigation described herein, and as illustrated in Fig. 3, allows for navigating to different levels of spreadsheet content and for providing additional or different software application functionality controls, for example, the comments button 310, the formulas button, 315, the most recently changed button 320, the sheets button 325, and the back button 330.

As described above, the user may subsequently navigate to additional content levels and/or functionality modes by further interaction with the spreadsheet 305 or the spreadsheet user interface 205. For example, a gesture interaction with the chart 340 may cause navigation to yet a lower level of spreadsheet content, wherein data underlying or associated with the chart 340 may be surfaced in the spreadsheet 305. Likewise, user interaction, for example, via a tap, swipe, pinch, or other gesture, described herein, with one of the functionality controls 310, 315, 320, 325, 330 may cause yet additional functionality associated with a different functionality mode to be exposed. For example, a tap, pinch, or other gesture applied to the formulas button/control 315 may cause navigation to a spreadsheet application mode specifically associated with creation and/or application of one or more formulas to data contained in the spreadsheet 305.

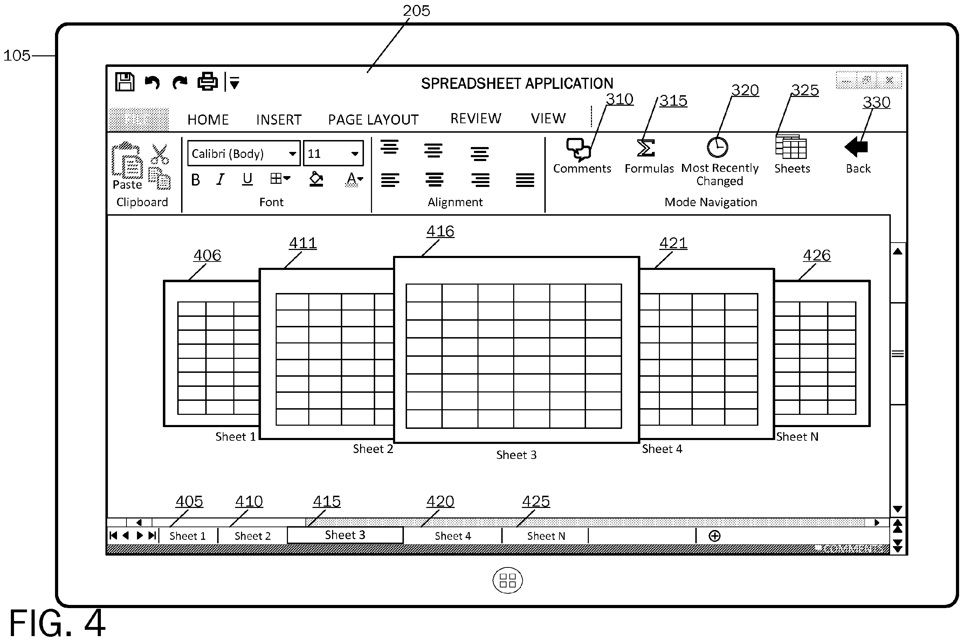

Referring now to Fig. 4, a sheets view is illustrated, wherein navigation of a spreadsheet workbook, spreadsheet file, or other spreadsheet indicator may result in a stacked or grouped view of one or more spreadsheet documents 406, 411, 416, 421, 426. For example, if a user launches the spreadsheet application user interface 205 followed by navigation to a spreadsheet workbook comprised of a number of individual spreadsheets, the user may interact with the spreadsheet workbook via one of the variety of touch/gesture interactions, described above, for navigating to the sheets view display mode illustrated in Fig. 4. For example, a spreadsheet workbook may be created as part of a collaborative workgroup, where the workbook is comprised of a number of spreadsheets created and/or edited by different members of the collaborative workgroup. According to examples of the present invention, in response to a touch/gesture interaction with the spreadsheet workbook, a sheets mode, as illustrated in Fig. 4, may be provided for allowing the user to peruse through a gallery or listing of thumbnail representations of each of the spreadsheets contained in the interacted-with workbook. Once in the sheets mode, the user may interact with each of the thumbnail representations 406, 411, 416, 421, 426 for perusing through the represented spreadsheets, for example, by swiping to the right or to the left for bringing different thumbnail representations to the forefront, as is the case with the illustrated spreadsheet representation 416. If the user determines that a particular sheet is of interest to either view, edit, or both, the user may interact with the thumbnail representation by tapping, touching, pinch/zooming, and the like for launching the actual spreadsheet document represented by the interacted-with thumbnail representation.

In addition, at the lower edge of the spreadsheet application user interface 205, a variety of sheet tabs 405, 410, 415, 420, 425 are illustrated. According to examples of the present invention, just as the user may interact with the thumbnail representations through touch/gesture interactions, so may the user utilize touch/gesture interaction with the sheet tabs 405-425 for launching the associated spreadsheets for viewing and/or editing. According to one example of the present invention, the sheet tab 415 is illustrated in an enlarged mode in association with the thumbnail representation 416 for sheet 3 that is displayed in the forefront of the other represented spreadsheets in the stacked sheet representations.

As illustrated in Fig. 4, the stacking of sheets in the form of thumbnail representations of a plurality of sheets may be done according to a variety of useful display mechanisms. The display mechanism illustrated in Fig. 4 illustrates a stack of sheets illustrated in a circular display pattern that allows the user to peruse through a great number of sheets, for example, where the number of sheets exceeds the number of sheet tabs that may fit along the bottom edge of the display's face. It should be appreciated, as the user rotates the stack of sheet representations to the right or to the left, the sheet tabs illustrated along the bottom edge of the display surface may be updated to correspond with the sheet representations presently displayed in the user interface 205.

Referring still to Fig. 4, as a user interacts with or navigates through the various represented spreadsheets, functionality modes associated with each of the spreadsheets likewise may be navigated. For example, the functionality buttons/controls 310, 315, 320, 325, 330, illustrated in Fig. 4, may be associated with the spreadsheet representation 416 currently at the forefront of the stacked of spreadsheet representations. As a user navigates a different spreadsheet representation to the forefront, for example the representation 421 for sheet 4, the functionality mode of the spreadsheet application 115 and user interface 205 may be changed to a functionality mode associated with the interacted-with spreadsheet representation. That is, as the example spreadsheet representation 421 is moved to the forefront, the functionality buttons/controls 310-330 may be replaced with other functionality buttons/controls associated with the spreadsheet representation 421.

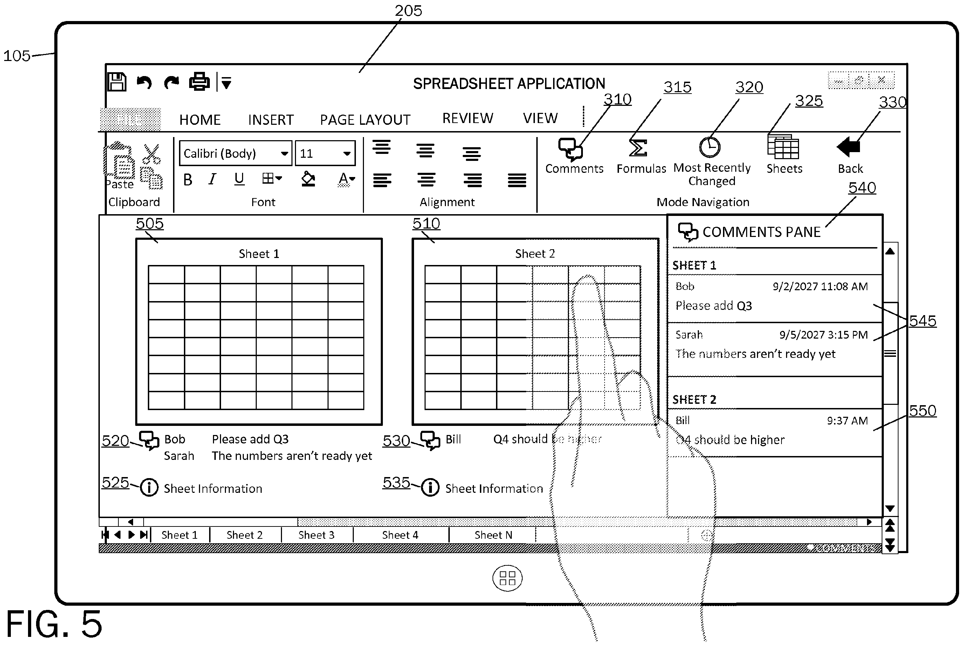

Referring now to Fig. 5, another example of the use of zoom navigation is illustrated and described. A pair of large sheet thumbnail representations 505, 510 is displayed in the user interface 205. According to the example of the present invention illustrated in Fig. 5, the thumbnail sheet representations 505, 510 are illustrated in a side-by-side orientation. As should be appreciated, the thumbnail representations could be displayed according to a variety of different display orientations, including, the stacked orientation illustrated and described above with reference to Fig. 4. As described above, the zoom navigation function described herein may be utilized in association with the displayed thumbnail representations 505, 510. For example, if a user selects the sheet representation 510, the corresponding spreadsheet 2 may be automatically launched into the user interface 205 to allow the user to interact with the spreadsheet represented by the thumbnail spreadsheet representation 510. Once the spreadsheet is launched into the user interface 205, the user may then perform any and all spreadsheet functions availability in association with the spreadsheet, including data entry, data manipulation, data computation, and the like.

Referring still to Fig. 5, another navigation mode that may be provided includes the display of comments and information in association with one or more spreadsheets. As well known to those skilled in the art, commenting is a task that most users often do across spreadsheets, and showing all comments in one place is difficult because they are typically location bound in association with a particular location in a given spreadsheet. Moreover, typical user interfaces simply aggregate all comments in a comments task pane, which can be cumbersome because selection of a given comment typically causes the associated spreadsheet to switch to the forefront, or causes instant navigation to a different location in a given spreadsheet at which the selected comment is located or is associated.

According to examples of the present invention, comments associated with one or more spreadsheets may be provided in association with thumbnail representations 505, 510, as illustrated in Fig. 5. For example, comments 520, 530 are illustrated in association with spreadsheet representations 505, 510 respectively, to allow a user a quick and easy review of comments associated with each of the represented spreadsheets. This is particularly useful in a collaborative work environment where a user may wish to quickly navigate through a number of spreadsheet representations 505, 510 that are contained in a spreadsheet workbook associated with her collaborative workgroup, and as the user peruses through the various spreadsheet representations 505, 510, she may be provided with comments information 520, 530 associated with each represented spreadsheet. According to examples of the present invention, if the user desires to "drill down" into any of the particular comments 520, 530, the user may utilize a zoom touch/gesture interaction, for example, a touch, pinch, swipe, and the like on a provided comment for navigating to yet a different mode, for example, a mode wherein the selected comments are be displayed in association with information in the corresponding spreadsheet to which they are associated.

As illustrated in Fig. 5, a variety of helpful icons, for example, the balloons illustrated in association with each comment may be provided for indicating the presence of one or more comments in association with a given spreadsheet. For example, the number of displayed icons (e.g., balloons) may be used to indicate a number (relative or exact) of comments associated with a given spreadsheet. According to an example of the present invention, selection of a comments icon or selection of a given comment text may cause a launching of the associated spreadsheet and/or navigation to a location in the associated spreadsheet at which the selected comment is located. As should be appreciated, according to one example of the present invention, comments may be provided directly in association with each spreadsheet representation 505, 510, as illustrated in Fig. 5, or comments may be provided in the comments pane 540, or comments may be provided both in association with each spreadsheet representation 505, 510 and in a deployed comments pane 540.

In addition to comments displayed in association with each spreadsheet representation 505, 510, a comments pane 540 may be provided in the user interface 205 in which comments associated with each spreadsheet may be provided for allowing a user to navigate through the various comments. According to one example of the present invention, the comments provided in the comments pane likewise may be navigated through a touch/gesture interaction, and if a given comment is selected from the comments pane, the corresponding spreadsheet may be launched and may be displayed such that the location in the spreadsheet for which the comment is provided may be immediately displayed to the navigating user.

In addition to comments 520, 530, other sheet information 525, 535 may be provided in association with each displayed spreadsheet representation 505, 510. For example, sheet information 525, 535 may include statistical information about each corresponding spreadsheet, for example, dates of edits applied to the corresponding spreadsheets, contact information for editors of the corresponding spreadsheets, heat maps showing numbers of edits and/or comments applied to each corresponding spreadsheet, and the like. That is, as should be appreciated, any available information about a given spreadsheet may be provided in the spreadsheet information 525, 535 such that selection of the spreadsheet information 525, 535 may launch yet another navigation mode which may include a variety of information about a corresponding spreadsheet.

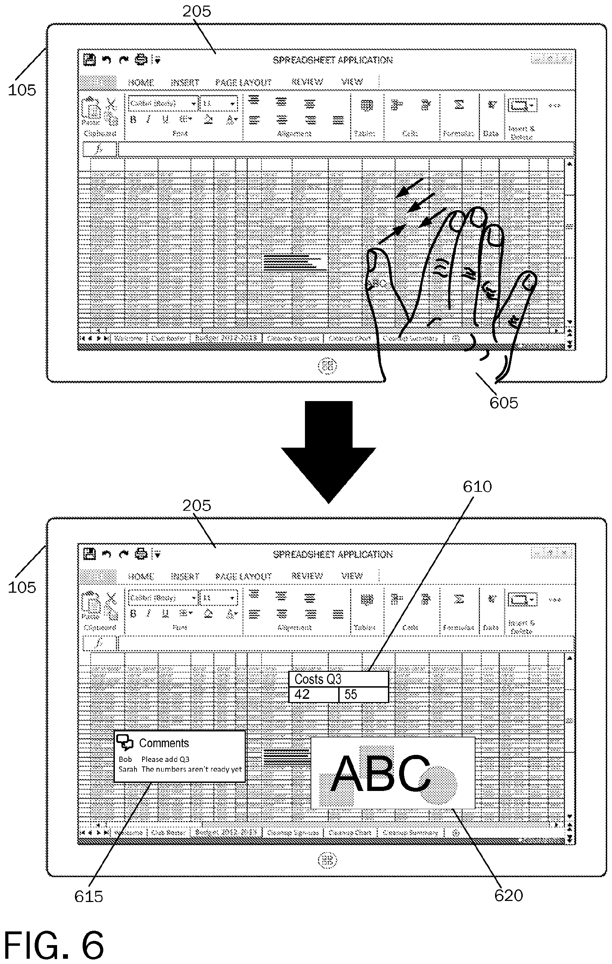

Referring now to Fig. 6, according to examples of the present invention, the zoom navigation functionality of the present invention may be utilized for improved navigation of very large spreadsheets containing a great number of rows and columns of data. As well known to those skilled in the art, when a very large spreadsheet is in use having hundreds or even thousands of rows and/or columns of data, navigating through the document to find particular spreadsheet objects, for example, tables, charts, individual text items, individual data items, and the like is cumbersome, and at times, seemingly impossible. According to examples of the present invention, touch/gesture interaction may be utilized for navigating a very large spreadsheet to expose desired information in the spreadsheet. Referring to Fig. 6, according to one example of the present invention, in response to a touch/gesture interaction on a large spreadsheet (illustrated in the top portion of Fig. 6.), a zoomed out map may be displayed for exposing one or more objects contained in the spreadsheet in the area of the spreadsheet interacted-with by the user 605 to give the user a quick reference as to where the user is in the large spreadsheet. For example, as illustrated in Fig. 6, after interacting with the spreadsheet, a comments box 615 is exposed, a costs table 610 is exposed and a text selection 620 is exposed. All three example objects are exposed in an enlarged manner relative to text/data around them to give the user an instant "roadmap" as to content items in the area of interaction so as to let the user know where she is currently located in the large spreadsheet.

Examples of content items/spreadsheet objects that may be exposed to view include, but are not limited to, subtotals, totals, tables, charts, named objects, pivot tables, and the like. According to an example of the present invention, the enlarged exposed content items/objects may be presented as thumbnail representations of the actual items/objects overlaid on a zoomed out view of the interacted-with sheet. Selection of such an exposed item/object may cause a launching of the selected item/object, instant navigation to a location in the document of the selected document, exposure of associated data, or combinations thereof. As should be appreciated, a reverse interaction, for example, a reverse pinch zoom (described above with reference to Figs. 2A - 2F) or selection of an appropriate user interface button/control may cause the sheet to return back to the pre-interacted-with mode.

Upon interaction with the large spreadsheet, as illustrated in Fig. 6, the application 115 may automatically detect the content items/objects in the area of the sheet being interacted with. According to one example of the present invention, the application 115 may divide the sheet into ranges, for example, breaking the spreadsheet into zones (e.g., every 5% of rows, every 100 rows, every 10,000 rows, or quadrants for wide and tall sheets, and the like). As should be appreciated, the sheet may be divided or parsed into many different ranges, but importantly, the ranges into which the sheet is divided are used to locate and expose interesting items, such as the content items/objects illustrated in Fig. 6 for allowing a user a map of her location in the sheet. In cases where the sheet is simply a large collection of text or data without any particular items or objects (e.g., tables, charts, etc.) that may readily be exposed, cell/row/column addresses may be exposed in an enlarged view manner, individual data items or text items may be exposed or combinations thereof to give the user an indication of location and/or context in sheet. Such zoom functionality as described herein with reference to Fig. 6 gives the user a visual index into large spreadsheets that contain many data/content items and allows the user an enhanced navigation experience.

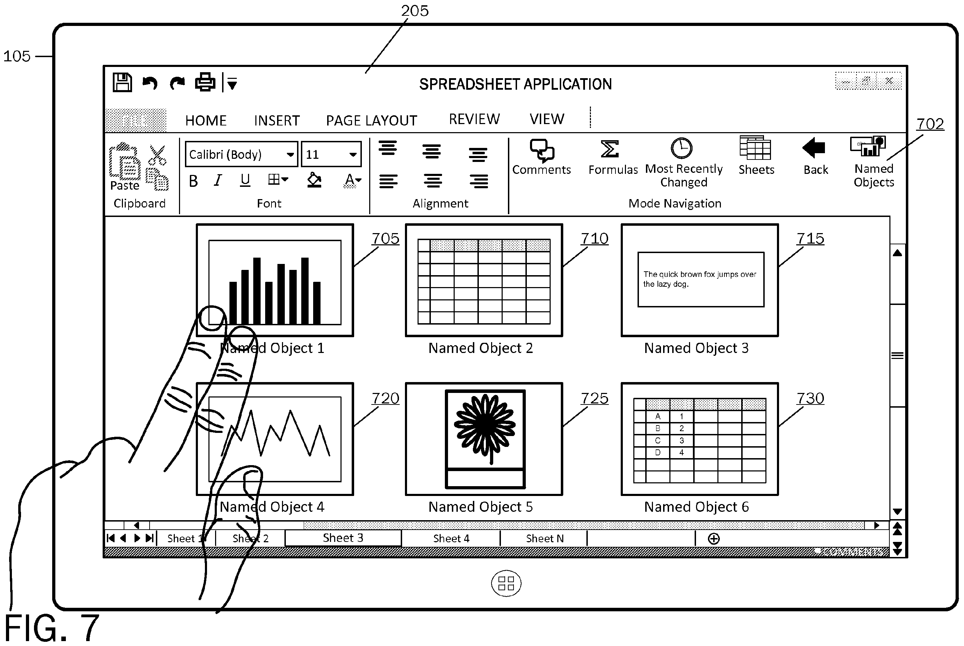

Referring now to Fig. 7, according to another navigation mode, a spreadsheet may be navigated according to named objects contained in the interacted-with spreadsheet. Consider for example, a spreadsheet document containing many rows and columns of data, but also containing a number of named objects, for example, a named chart, a named table, a named image, and the like. According to an example of the present invention, in response to a specified touch/gesture interaction with a given spreadsheet (e.g., as illustrated and described above with reference to Figs. 2A - 2F), a different display mode may be navigated to for displaying one or more named objects contained in the interacted-with spreadsheet. As illustrated in Fig. 7, after such an interaction, a number of named objects 705, 710, 715, 720, 725, 730 are exposed and/or displayed in the user interface 205 to allow the user to peruse, review, and if desired, select one of the surfaced named objects. According to an example of the present invention, each of the displayed named objects 705-730 may be displayed as thumbnail representations of the actual named objects contained in the associated spreadsheet. The named objects surfaced and displayed, as illustrated in Fig. 7, may be named objects contained in a given spreadsheet, or the named objects may be those named objects contained across a variety of spreadsheets contained in a workbook or folder of spreadsheets. The named objects may be displayed as a collection of named objects, as illustrated in Fig. 7, or the named objects may be displayed in association with an underlying spreadsheet, an illustrated in Fig. 6.

As should be appreciated, if the user selects one of the surfaced named objects utilizing a specified touch/gesture interaction, as described above, the interacted-with named object may be launched into the spreadsheet grid or canvas to allow the user to edit, or otherwise interact with the selected named object. Alternatively, selection of one of the surfaced named objects may cause a launching of the associated spreadsheet and a display of the launched spreadsheet at a location containing data associated with the selected named object, or containing the selected named object. As illustrated in Fig. 7, a named objects button/control 702 is illustrated in user interface 205 for allowing a user to utilize functionality of the spreadsheet application 115 in association with one of the named objects.

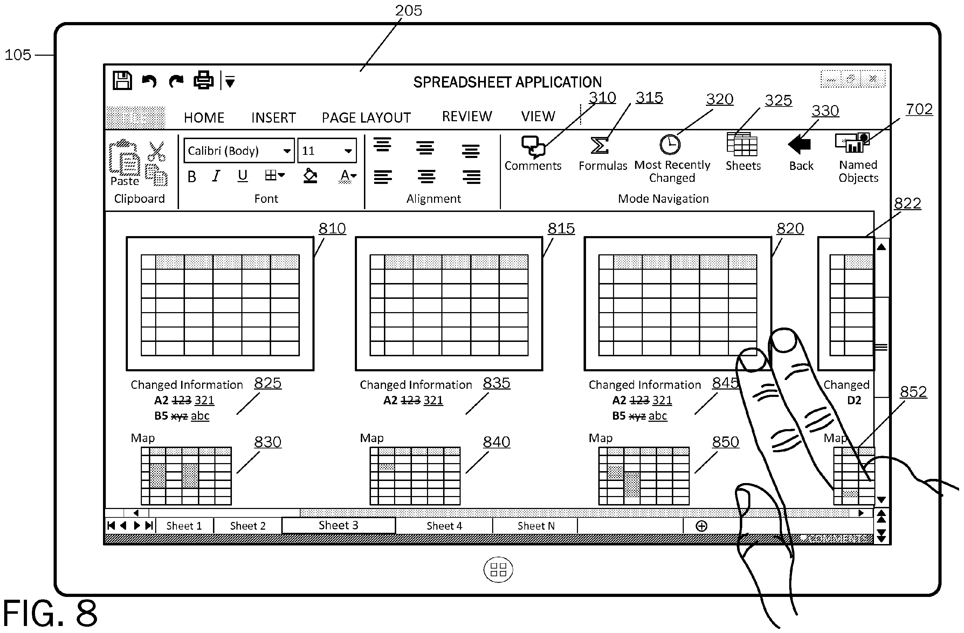

Referring now to Fig. 8, another navigation mode that may be provided in accordance with the zoom functionality described herein includes a navigation mode in which activity associated with one or more spreadsheets is graphically illustrated to a navigating user. For example, information showing activity related to each of one or more spreadsheets may be provided. Referring to Fig. 8, thumbnail representations 810, 815, 820, 822 are provided in the spreadsheet user interface 205 in response to a specified touch/gesture interaction, as described above. For example, if a user is editing or otherwise utilizing a plurality of spreadsheets in association with a collaborative workgroup, the user may wish to learn information about editing, utilization, or other activity associated with each of the spreadsheets contained in the group's spreadsheet workbook. In response to a specified touch/gesture interaction, for example, a multi-finger pinch zoom interaction, the activity mode illustrated in Fig. 8 may be navigated-to to allow the user to receive information about editing/change activity associated with each spreadsheet of interest to the user.

As illustrated in Fig. 8, beneath each thumbnail sketch, a variety of change information 825, 835, 845 is provided for each represented spreadsheet to provide the user immediate information about each represented spreadsheet. For example, referring to the change information 825 associated with the spreadsheet representation 810, the user can quickly determine that cell A2 was changed from a value of "123" to a value of "321" and that cell B2 was changed from a text string of "xyz" to a text string of "abc". As should be appreciated, other information may be provided, including a number of changes made to a given spreadsheet, identities of those persons making the corresponding changes, and the like.

Referring still to Fig. 8, change maps 830, 840, 850, 852 are illustrated beneath the respective spreadsheet representations 810, 815, 820, 822 for providing a visual map of the locations in the corresponding spreadsheets at which the changes have been made. According to one example of the present invention, the change maps may be in the form of "heat" maps that show amounts/numbers of changes made to a given spreadsheet by displaying colored or shaded layers, visually highlighting areas of activity. In addition, one or more selectable icons, pop-out boxes (with information) and the like may be provided in the maps 830, 840, 850, 852 for providing useful information. Selection of any of such user interface components may allow for navigation to associated data/content.

As should be appreciated, selection of any of the thumbnail representations 810, 815, 820, 822 may cause an immediate launching of the associated spreadsheet to allow the user to edit or otherwise utilize the interacted-with spreadsheet. Similarly, selection of one of the change maps 830, 840, 850, 852 may cause a launching of the associated spreadsheet, and according to one example of the present invention, the associated spreadsheet may be launched such that the locations of the changes applied to the associated spreadsheet are surfaced and highlighted to the user.

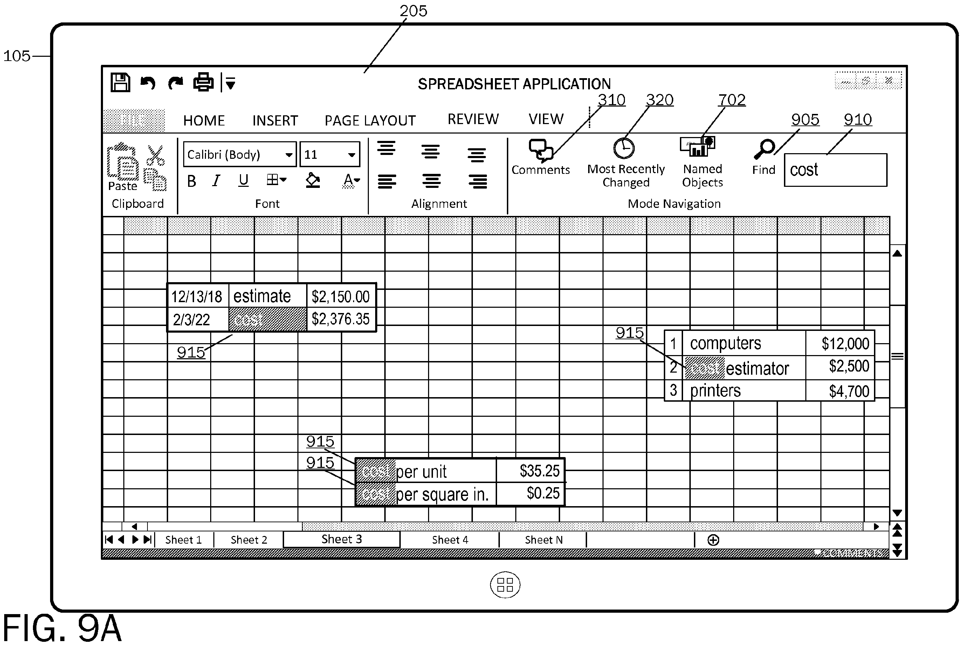

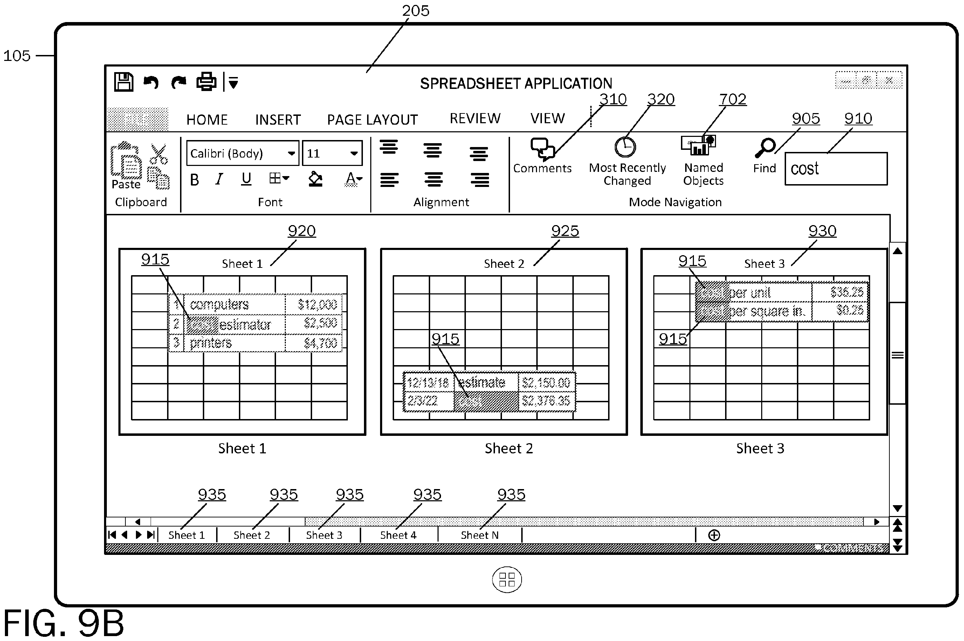

Referring now to Figs. 9A and 9B, an improved zoom navigation "find" function is illustrated and described. Referring to Fig. 9A, a find function 905 and a find field 910 are provided in the user interface 205 for allowing entry of a text term or numeric term a user wishes to find in a given spreadsheet document or across a number of spreadsheets. As known to those skilled in the art, typical prior find functions navigate the user to each instance of a found number/word. Users typically have to select a series of find functions (e.g., "find next," "find next," "find next") until they get to a desired location. Many times users may have a vague sense of where in a document the desired number/word is and would like to go just to that number/word. According to examples of the present invention, a find feature is provided and allows all instances of the occurrence of the word/number to be displayed at once across an entire spreadsheet, as illustrated in Fig. 9A, or across a number of spreadsheets (e.g., all sheets in a workbook or folder), as illustrated in Fig. 9B.

Referring to Fig. 9A, in response to an example find function on the word "cost", all instances 915 of the word "cost" are found and are highlighted to the user. As illustrated in Fig. 9B, all instances 915 of the word "cost" are found and are highlighted across a number of spreadsheets 920, 925, 930. According to an example of the present invention, each balloon, box or highlighted area containing an instance of the found word/term may be rendered large enough to show a few words around it to give some context, as illustrated in Figs. 9A and 9B. This also makes it easy to see roughly "where" in the spreadsheet the occurrence of the word/term happens. By tapping, touching or otherwise interacting with a found word/term, instant navigation to the interacted-with word/term may be provided.

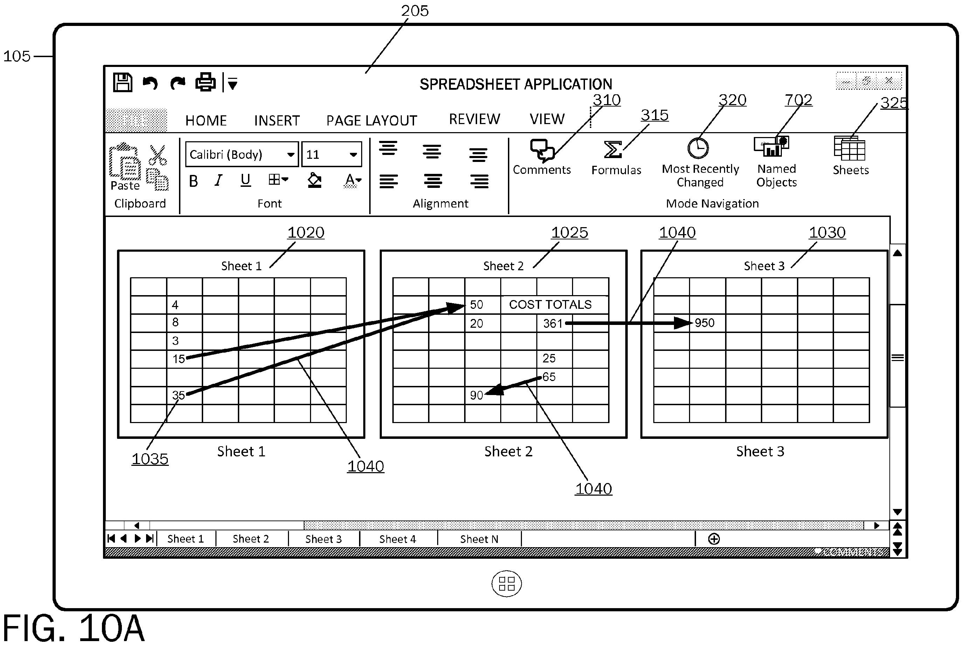

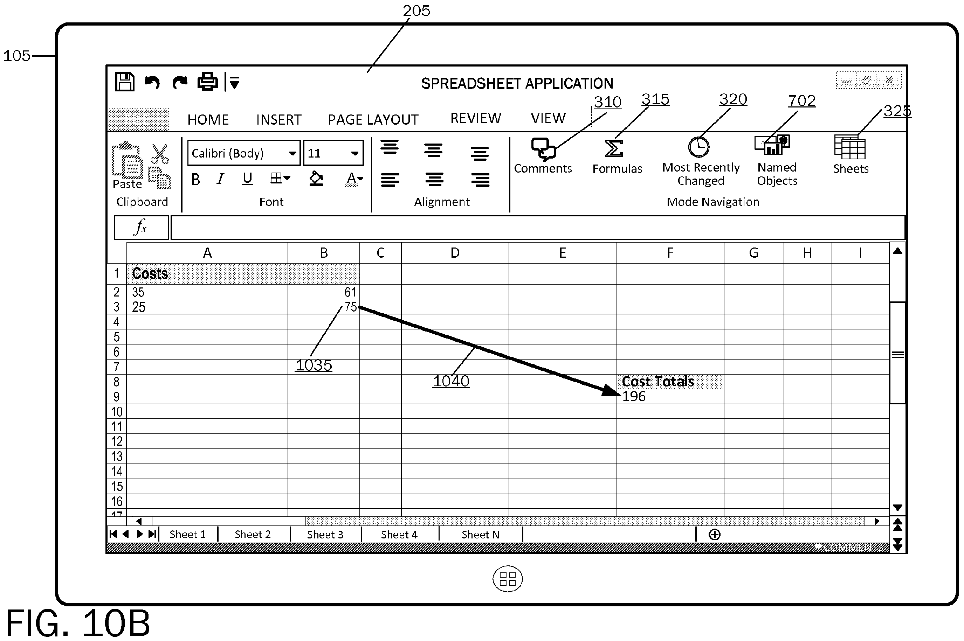

Referring now to Figs. 10A and 10B, another navigation mode that may be provided in accordance with examples of the present invention includes a showing of dependencies in a given spreadsheet document or across a plurality of spreadsheet documents. For example, a showing of the dependencies between cell locations in one or more spreadsheets and/or formula dependencies may be provided. According to prior methods and systems, tracing formula/function dependencies can be difficult to do, particularly with very large spreadsheets or where formulas/functions have dependencies existing across multiple spreadsheets. For example, if a formula in a given cell adds 10 different numbers that are taken from cells existing in five different spreadsheets, keeping track of the locations of each cell can be cumbersome and time consuming. According to examples of the present invention, a visual representation of formula/function dependencies may be provided.

Referring to Fig. 10A, in response to a specified touch/gesture or formula/function dependency function selection 1010, dependencies between cell locations across three example spreadsheets are illustrated. For example, in response to a touch, such as a double tap, on a given cell or formula bar containing a formula or function, the dependencies associated with the formula or function may be graphically illustrated. As illustrated in Fig. 10A, one illustration method is to display arrows 1040 between various spreadsheet cells to give the user a quick and easy visualization of each cell location that contains text, data or a formula/function associated with the selected formula function. Fig. 10B illustrates a dependency visualization in a single spreadsheet for showing how data 1035 is in cell B3 is associated with data contained in cell F9.

As illustrated in Fig. 10A, interaction with a given formula/function or dependency indicator may also cause a display of dependent/precedent formulas/functions which may be ordered in order of the parameters/dependencies. The various spreadsheets (representations 1020, 1025, 1030) associated with a selected or interacted-with formula/function may be rearranged on the screen next to each formula/function in the visual representation so that the formula/function chain (arrows 1040) is the main display item exposed to the user such that the associated spreadsheets are displayed to allow the user to fully appreciate each step in a given formula/function. According to one example of the present invention, such a display of dependencies may be accomplished in a two-dimensional or three-dimensional representation for visual effect.

According to an embodiment, the spreadsheet representations 1020, 1025 and 1030 may be thumbnail representations of the associated spreadsheets which when selected allow for navigation to the associated spreadsheets. In addition, the arrows 1040 may be selectable objects which when selected allow for presentation of information about the associated formula or dependency and/or allow for navigation to a particular location in a spreadsheet containing the formula or dependency.

According to an alternative example of the present invention, instead of arrows 1040, other dependency indicators may be provided. For example, each formula/function may be associated with a balloon or other user interface component that includes a textual indication of the dependencies. Selection of such a balloon or user interface component may cause a showing of the dependencies 1040 or may show a textual description of the dependencies. Interaction with a given formula/function or dependency indicator (e.g., arrow 1040) may also cause the interacted-with formula/function to be displayed bigger or in a highlighted manner.

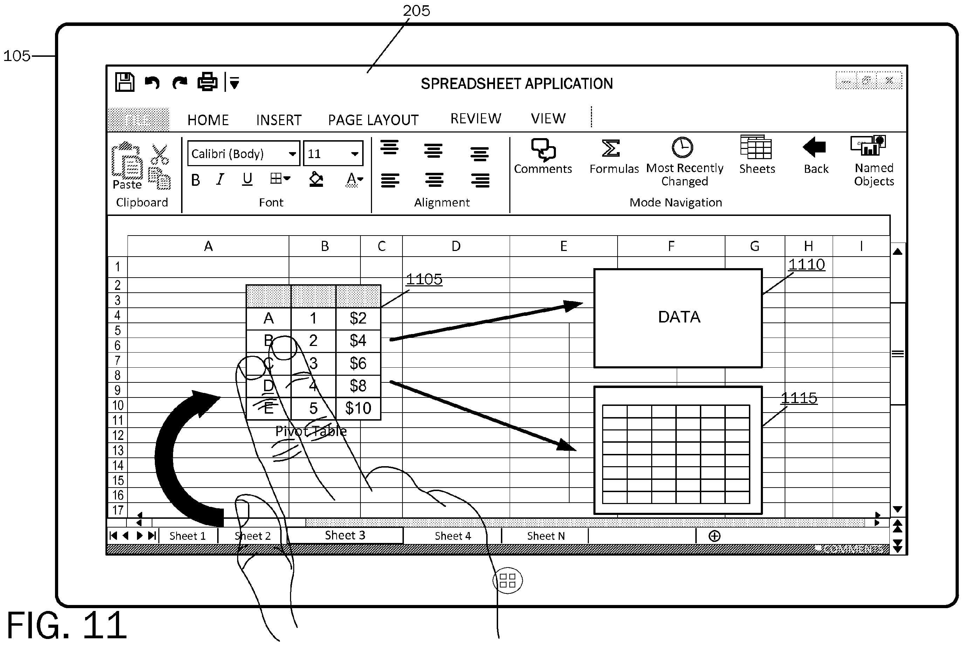

Referring now to Fig. 11, according to another navigation mode, in response to a specified touch/gesture interaction with a given spreadsheet object, for example, a spreadsheet chart, data in the same (internal data to the spreadsheet) or other spreadsheet associated with the interacted-with object may be surfaced to allow a user to understand the data underlying or associated with or required for the interacted-with object. For example, in response to "pinch zoom" on an object 1105, such as table, chart, pivot table, pivot chart, and the like, any data 1110 or other objects 1115 that are associated with the interacted-with object may be displayed to the user. According to one example of the present invention, the associated data 1110 or objects 1115 may be displayed as thumbnail representations. Selection of the thumbnail representations may cause navigation to the actual data or objects or to locations in the spreadsheet or other spreadsheets where the data or objects are located. According to another example of the present invention, the associated data or objects may be displayed in a pop up menu or display, or interaction with the starting object 1105 may cause immediate navigation to the associated data 1110 or objects 1115.

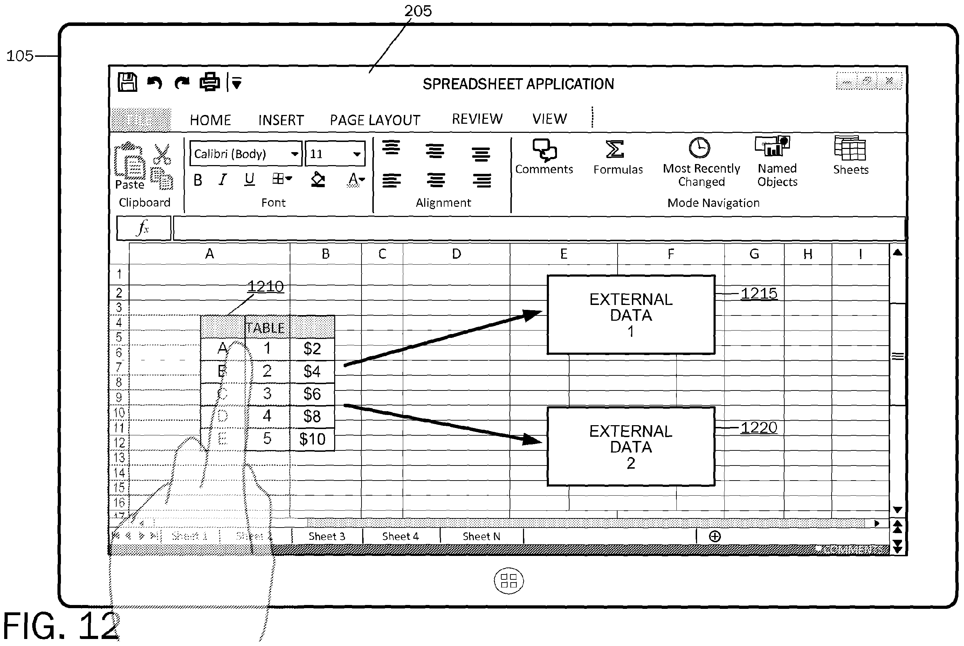

Referring now to Fig. 12, according to another navigation mode, in response to a specified touch/gesture interaction with a given spreadsheet object, for example, a spreadsheet chart, metadata associated with the spreadsheet (or specific object) or data external to the interacted-with spreadsheet object (for example, external data from a third party source associated with the interacted-with spreadsheet object) may be surfaced to allow a user to understand the metadata or external data underlying or associated with or required for the interacted-with object. That is, by zooming in/out on an object that is associated with one or more metadata items or that is populated from a given data source, information on the metadata or data source(s) 1215, 1220 may be presented to allow the user to receive information on the metadata or data source(s). Such information may include a display of data, information on connection strings between data sources, information on data queries, authentication properties, and the like. Receiving information on external data sources may also include launching a query builder for assisting the user in building data queries between a spreadsheet (or, spreadsheet object) and one or more external data sources. Such information may be provided in a user interface component (box, window, pane, etc.), or the information may be displayed as an overlay over the spreadsheet, as illustrated in Fig. 12.

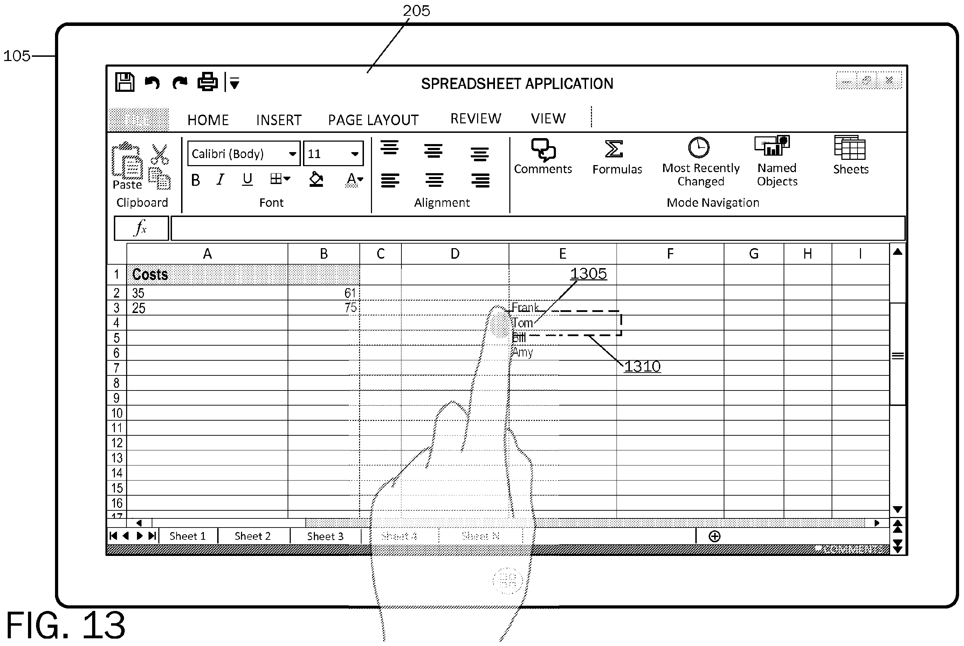

Referring now to Fig. 13, a notched mode for enhancing touch/gesture interaction with a spreadsheet object is illustrated and described. According to examples of the present invention, as a given cell, data item or object becomes too small owing to a current zoom setting or owing to a small display surface, utilizing touch interaction may be problematic because when a user touches a desired location on a display surface, the user may inadvertently touch to adjacently disposed cells, data items, objects, etc., and thus, an interaction error may occur (wrong item selected) or an interaction ambiguity may occur where the application 115 is forced to decide which item received the proper interaction. Referring to Fig. 13, according to an example of the present invention, a notched mode may be provided wherein a touchable padding 1310 may be disposed about a given data item, or object to allow for efficient touch interaction. According to examples of the present invention, the notched mode may be provided in response to a specified touch/gesture interaction, selection of an appropriate functionality control, or automatically upon application 115 detection that the display space is smaller than a given threshold or that a displayed spreadsheet or object has been optically zoomed to a point that touch interaction with individual data items or objects will be difficult.

Referring still to Fig. 13, the touchable padding 1310 is a zone about individual cells, data items and/or data objects that increases the area which when touched is received as a selection of the item about which the padding has been disposed. As should be appreciated, the padding 1310 may be placed around certain items, for example, cells containing formulas/functions, or around certain selectable buttons or controls considered likely to be selected based on the context of the spreadsheet document and associated objects. According to one example of the present invention, the padding 1310 may be disposed inside a cell or between cells to make a given cell easier to select or for decreasing selection ambiguity between neighboring cells.

Having described an example operating environment and various aspects of examples of the present invention above with reference to Figs. 1 through 13, Fig. 14 is a flow chart illustrating a method for interacting with an electronic spreadsheet document via zoom interaction and navigation. The method 1400 begins at start operation 1405 and proceeds to operation 1410 where an electronic spreadsheet workbook/file, individual electronic spreadsheet or collection of electronic spreadsheets, or a spreadsheet object is/are received for use according to the functionality of the application 115. At operation 1415, a touch/gesture interaction, as described above with reference to Figs. 2A - 2F is received for initiating or performing a zoom navigation and/or interaction with a spreadsheet, spreadsheet object or with a plurality of spreadsheets.

At operation 1420, different modes of spreadsheet application user interface modes may be navigated for obtaining various application 115 functionalities for use in association with a given spreadsheet or spreadsheet object. At operation 1425, different content levels are navigated to allow a user to review and/or access different levels of data associated with the interacted-with spreadsheet or spreadsheet object (e.g., local or external data associated with an interacted spreadsheet or object, spreadsheet objects associated with a higher level interacted-with object, etc.). At operation 1430, enhanced spreadsheet information may be provided in response to a given touch/gesture interaction, including information about changes, authorship, formula/function dependencies, information on named objects, and the like, as described herein. At operation 1435, if required, a touchable padding may be disposed in or around a selectable area of a spreadsheet or spreadsheet object to enhance touch interaction with the selectable area. The method 1400 ends at operation 1499.

While the invention has been described in the general context of program modules that execute in conjunction with an application program that runs on an operating system on a computer, those skilled in the art will recognize that the invention may also be implemented in combination with other program modules. Generally, program modules include routines, programs, components, data structures, and other types of structures that perform particular tasks or implement particular abstract data types.

The embodiments and functionalities described herein may operate via a multitude of computing systems including, without limitation, desktop computer systems, wired and wireless computing systems, mobile computing systems (e.g., mobile telephones, netbooks, tablet or slate type computers, notebook computers, and laptop computers), hand-held devices, multiprocessor systems, microprocessor-based or programmable consumer electronics, minicomputers, and mainframe computers.

In addition, the embodiments and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example user interfaces and information of various types may be displayed and interacted with on a wall surface onto which user interfaces and information of various types are projected. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

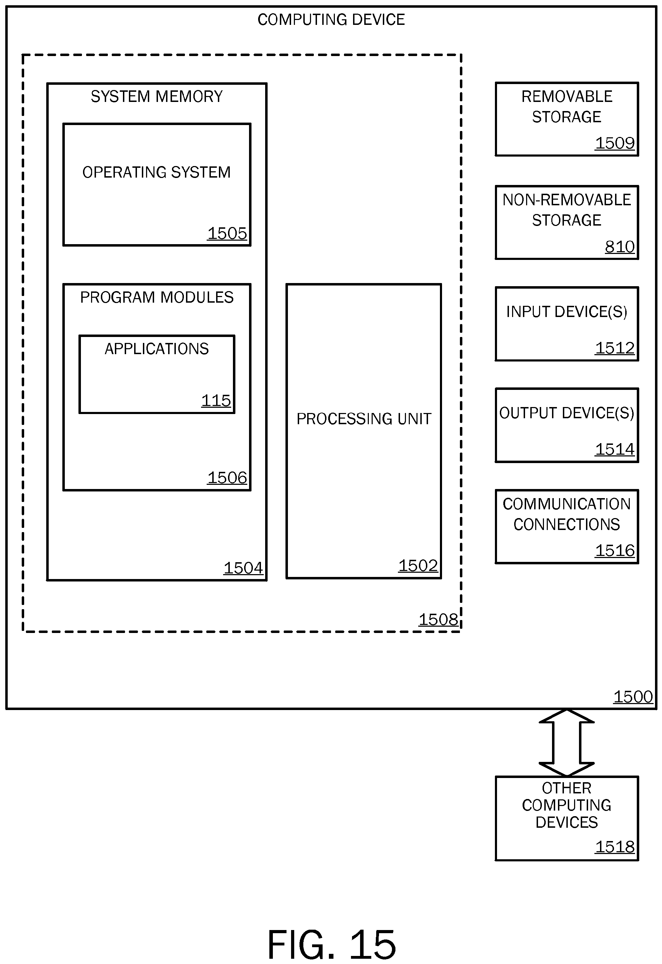

Figs. 15-17 and the associated descriptions provide a discussion of a variety of operating environments in which embodiments of the invention may be practiced. However, the devices and systems illustrated and discussed with respect to Figs. 15-17 are for purposes of example and illustration and are not limiting of a vast number of computing device configurations that may be utilized for practicing embodiments of the invention, described herein.

Fig. 15 is a block diagram illustrating physical components (i.e., hardware) of a computing device 1500 with which embodiments of the invention may be practiced. The computing device components described below may be suitable for the computing devices 105, 110, 120, 125, 135 described above. In a basic configuration, the computing device 1500 may include at least one processing unit 1502 and a system memory 1504. Depending on the configuration and type of computing device, the system memory 1504 may comprise, but is not limited to, volatile storage (e.g., random access memory), non-volatile storage (e.g., read-only memory), flash memory, or any combination of such memories. The system memory 1504 may include an operating system 1505 and one or more program modules 1506 suitable for running a variety of applications 1520. The operating system 1505, for example, may be suitable for controlling the operation of the computing device 1500. Furthermore, embodiments of the invention may be practiced in conjunction with a graphics library, other operating systems, or any other application program and is not limited to any particular application or system. This basic configuration is illustrated in Fig. 15 by those components within a dashed line 1508. The computing device 1500 may have additional features or functionality. For example, the computing device 1500 may also include additional data storage devices (removable and/or non-removable) such as, for example, magnetic disks, optical disks, or tape. Such additional storage is illustrated in Fig. 15 by a removable storage device 1509 and a non-removable storage device 1510.

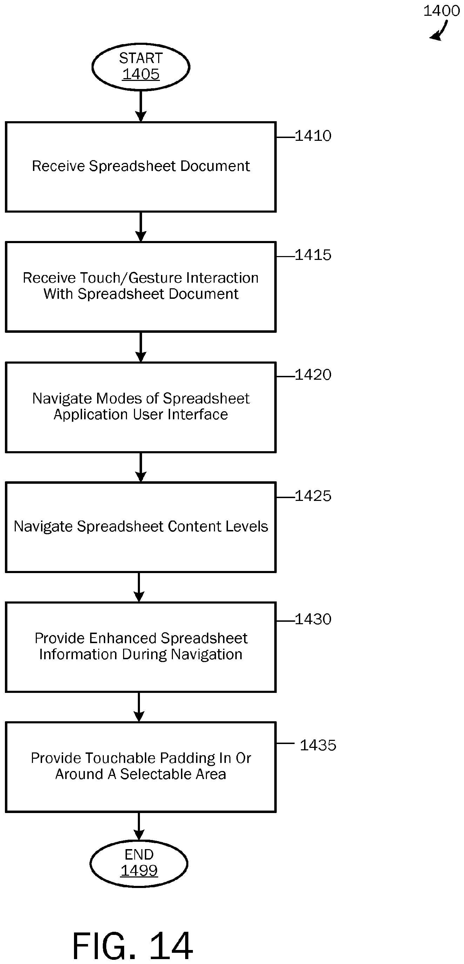

As stated above, a number of program modules and data files may be stored in the system memory 1504. While executing on the processing unit 1502, the program modules 1506 may perform processes including, but not limited to, one or more of the stages of the method 1400 illustrated in Fig. 14. Other program modules that may be used in accordance with embodiments of the present invention may include applications, such as, notes applications, Internet browser applications, electronic mail and contacts applications, word processing applications, spreadsheet applications, database applications, slide presentation applications, drawing or computer-aided application programs, etc.

Furthermore, embodiments of the invention may be practiced in an electrical circuit comprising discrete electronic elements, packaged or integrated electronic chips containing logic gates, a circuit utilizing a microprocessor, or on a single chip containing electronic elements or microprocessors. For example, embodiments of the invention may be practiced via a system-on-a-chip (SOC) where each or many of the components illustrated in Fig. 15 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to use of web page content may be operated via application-specific logic integrated with other components of the computing device 1500 on the single integrated circuit (chip). Embodiments of the invention may also be practiced using other technologies capable of performing logical operations such as, for example, AND, OR, and NOT, including but not limited to mechanical, optical, fluidic, and quantum technologies. In addition, embodiments of the invention may be practiced within a general purpose computer or in any other circuits or systems.

The computing device 1500 may also have one or more input device(s) 1512 such as a keyboard, a mouse, a pen, a sound input device, a touch input device, etc. The output device(s) 1514 such as a display, speakers, a printer, etc. may also be included. The aforementioned devices are examples and others may be used. The computing device 1500 may include one or more communication connections 1516 allowing communications with other computing devices 1518. Examples of suitable communication connections 1516 include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 1504, the removable storage device 1509, and the non-removable storage device 1510 are all computer storage media examples (i.e., memory storage.) Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 1500. Any such computer storage media may be part of the computing device 1500.

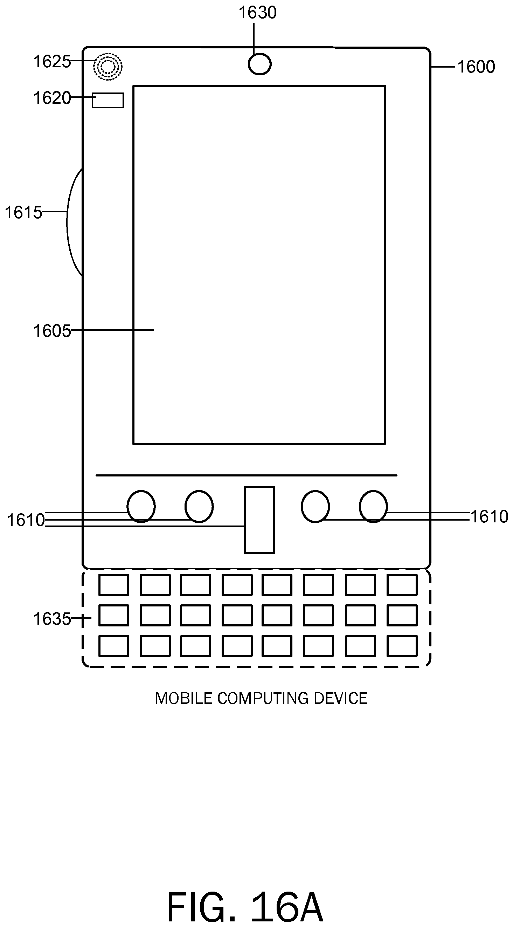

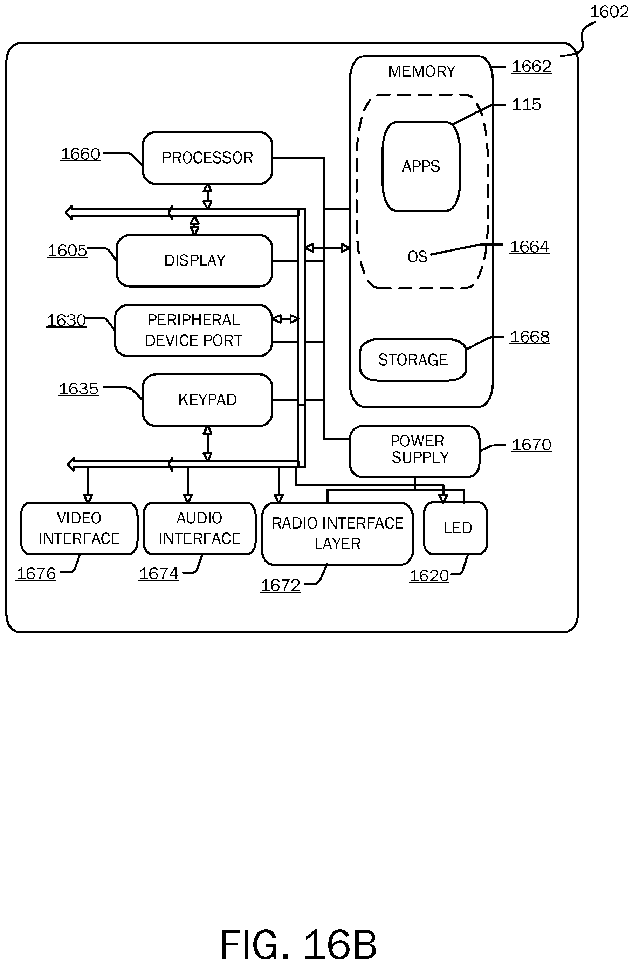

Figs. 16A and 16B illustrate a mobile computing device 1600, for example, a mobile telephone, a smart phone 110, a tablet-style personal computer 105, a laptop computer, and the like, with which embodiments of the invention may be practiced. With reference to Fig. 16A, one example of the present invention of a mobile computing device 1600 for implementing the embodiments is illustrated. In a basic configuration, the mobile computing device 1600 is a handheld computer having both input elements and output elements. The mobile computing device 1600 typically includes a display 1605 and one or more input buttons 1610 that allow the user to enter information into the mobile computing device 1600. The display 1605 of the mobile computing device 1600 may also function as an input device (e.g., a touch screen display). If included, an optional side input element 1615 allows further user input. The side input element 1615 may be a rotary switch, a button, or any other type of manual input element. In alternative examples of the present invention, mobile computing device 1600 may incorporate more or less input elements. For example, the display 1605 may not be a touch screen in some examples of the present invention. In yet another alternative example of the present invention, the mobile computing device 1600 is a portable phone system, such as a cellular phone. The mobile computing device 1600 may also include an optional keypad 1635. Optional keypad 1635 may be a physical keypad or a "soft" keypad generated on the touch screen display. In various examples of the present invention, the output elements include the display 1605 for showing a graphical user interface (GUI), a visual indicator 1620 (e.g., a light emitting diode), and/or an audio transducer 1625 (e.g., a speaker). In some examples of the present invention, the mobile computing device 1600 incorporates a vibration transducer for providing the user with tactile feedback. In yet another example of the present invention, the mobile computing device 1600 incorporates input and/or output ports, such as an audio input (e.g., a microphone jack), an audio output (e.g., a headphone jack), and a video output (e.g., a HDMI port) for sending signals to or receiving signals from an external device.

Fig. 16B is a block diagram illustrating the architecture of one example of a mobile computing device. That is, the mobile computing device 1600 can incorporate a system (i.e., an architecture) 1602 to implement some examples of the present invention. In one example of the present invention, the system 1602 is implemented as a "smart phone" capable of running one or more applications (e.g., browser, e-mail, calendaring, contact managers, messaging clients, games, and media clients/players). In some examples of the present invention, the system 1602 is integrated as a computing device, such as an integrated personal digital assistant (PDA) and wireless phone.

One or more application programs may be loaded into the memory 1662 and run on or in association with the operating system 1664. Examples of the application programs include phone dialer applications, e-mail applications, personal information management (PIM) applications, word processing applications, spreadsheet applications, Internet browser applications, notes applications, messaging applications, and so forth. The system 902 also includes a non-volatile storage area 1668 within the memory 1662. The non-volatile storage area 1668 may be used to store persistent information that should not be lost if the system 1602 is powered down. The application programs may use and store information in the non-volatile storage area 1668, such as e-mail or other messages used by an e-mail application, and the like. A synchronization application (not shown) also resides on the system 1602 and is programmed to interact with a corresponding synchronization application resident on a host computer to keep the information stored in the non-volatile storage area 1668 synchronized with corresponding information stored at the host computer. As should be appreciated, other applications may be loaded into the memory 1662 and run on the mobile computing device 1600.

The system 1602 has a power supply 1670, which may be implemented as one or more batteries. The power supply 1670 might further include an external power source, such as an AC adapter or a powered docking cradle that supplements or recharges the batteries.

The system 1602 may also include a radio 1672 that performs the function of transmitting and receiving radio frequency communications. The radio 1672 facilitates wireless connectivity between the system 1602 and the "outside world," via a communications carrier or service provider. Transmissions to and from the radio 1672 are conducted under control of the operating system 1664. In other words, communications received by the radio 1672 may be disseminated to the application programs 115 via the operating system 1664, and vice versa.

The visual indicator 1620 may be used to provide visual notifications and/or an audio interface 1674 may be used for producing audible notifications via the audio transducer 1625. In the illustrated example of the present invention, the visual indicator 1620 is a light emitting diode (LED) and the audio transducer 1625 is a speaker. These devices may be directly coupled to the power supply 1670 so that when activated, they remain on for a duration dictated by the notification mechanism even though the processor 1660 and other components might shut down for conserving battery power. The LED may be programmed to remain on indefinitely until the user takes action to indicate the powered-on status of the device. The audio interface 1674 is used to provide audible signals to and receive audible signals from the user. For example, in addition to being coupled to the audio transducer 1625, the audio interface 1674 may also be coupled to a microphone to receive audible input, such as to facilitate a telephone conversation. In accordance with examples of the present invention, the microphone may also serve as an audio sensor to facilitate control of notifications, as will be described below. The system 1602 may further include a video interface 1676 that enables an operation of an on-board camera 1630 to record still images, video stream, and the like.

A mobile computing device 1600 implementing the system 1602 may have additional features or functionality. For example, the mobile computing device 1600 may also include additional data storage devices (removable and/or non-removable) such as, magnetic disks, optical disks, or tape. Such additional storage is illustrated in Fig. 16B by the non-volatile storage area 1668.

Data/information generated or captured by the mobile computing device 1600 and stored via the system 1602 may be stored locally on the mobile computing device 1600, as described above, or the data may be stored on any number of storage media that may be accessed by the device via the radio 1672 or via a wired connection between the mobile computing device 1600 and a separate computing device associated with the mobile computing device 1600, for example, a server computer in a distributed computing network, such as the Internet. As should be appreciated such data/information may be accessed via the mobile computing device 1600 via the radio 972 or via a distributed computing network. Similarly, such data/information may be readily transferred between computing devices for storage and use according to well-known data/information transfer and storage means, including electronic mail and collaborative data/information sharing systems.

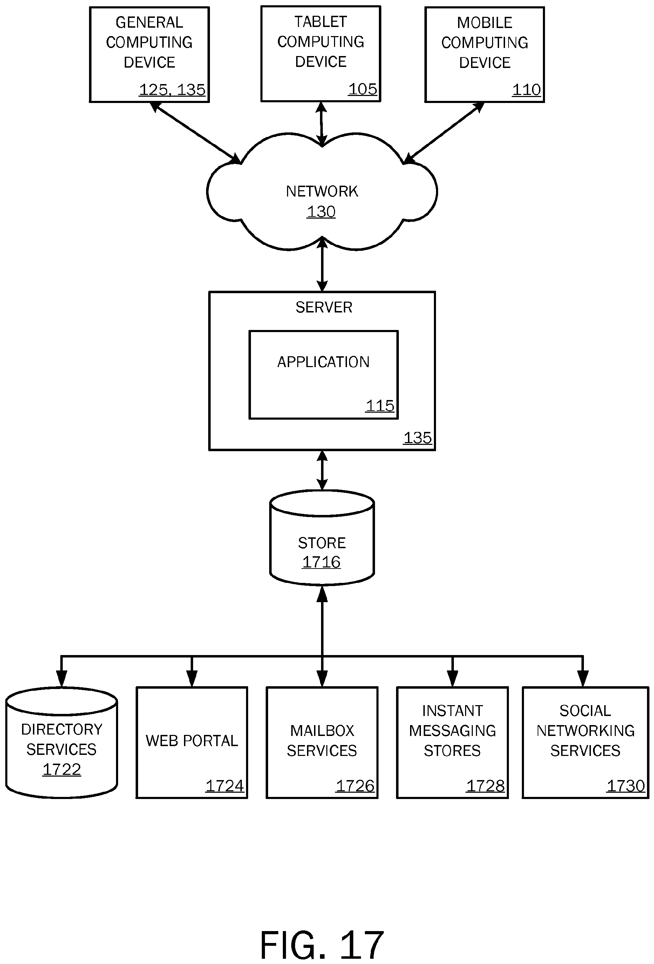

Fig. 17 illustrates one example of the present invention of the architecture of a system for providing efficient spreadsheet interaction with electronic computing devices, as described above. Content developed, interacted with, or edited in association with embodiments of the invention may be stored in different communication channels or other storage types. For example, various documents and stored content items may be stored using a directory service 1722, a web portal 1724, a mailbox service 1726, an instant messaging store 1728, or a social networking site 1730. The spreadsheet interaction and navigation described herein may use any of these types of systems or the like for enabling data utilization, as described herein. A server 135 may provide output of the spreadsheet interaction and navigation to clients. As one example, the server 135 may be a web server providing the spreadsheet interaction and navigation over the web. The server 135 may provide the output of the spreadsheet interaction and navigation functionality over the web to clients through a network 130. By way of example, the client computing device may be implemented and embodied in a personal computer 1500, a tablet computing device 105 and/or a mobile computing device (e.g., a smart phone) 110, or other computing device. Any of these embodiments of the client computing device 1500, 105, 110, 120, 125, 135 may obtain content from the store 1716.

Embodiments of the present invention, for example, are described above with reference to block diagrams and/or operational illustrations of methods, systems, and computer program products according to embodiments of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more embodiments provided in this application are not intended to limit or restrict the scope of the invention as claimed in any way. The embodiments, examples, and details provided in this application are considered sufficient to convey possession and enable others to make and use the best mode of claimed invention. The claimed invention should not be construed as being limited to any embodiment, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate embodiments falling within the broader aspects of the general inventive concept embodied in this application that do not depart from the broader scope of the claimed invention.

## Claims

1. A system for spreadsheet navigation; comprising:
one or more processors (1502); and
a memory (1504) coupled to the one or more processors, the one or more processors operable to:
display an electronic spreadsheet document (210) via a first spreadsheet application (115) user interface mode;
display a first content level of an electronic spreadsheet document in association with the first spreadsheet application user interface mode;
receive a first gesture on the electronic spreadsheet document;
automatically navigate to and display a second content level of the electronic spreadsheet document, the second content level of the electronic spreadsheet document displaying thumbnail representations of enlarged content items overlaid on a zoomed out view of the electronic spreadsheet document, wherein
the thumbnail representations of the enlarged content items provide a reference relating to a location of the content items in the electronic spreadsheet document;
receive a selection of one of the thumbnail representations; and
navigate to the location of the selected thumbnail representation in the electronic spreadsheet document.

2. A method of spreadsheet navigation; comprising:
displaying a first spreadsheet application (115) user interface mode;
displaying a first content level of an electronic spreadsheet document (210) in association with the first spreadsheet application user interface mode;
receiving a first gesture directed to the electronic spreadsheet document;
automatically navigating to and displaying a second content level of the electronic spreadsheet document, the second content level of the electronic spreadsheet document displaying thumbnail representations of enlarged content items overlaid on a zoomed out view of the electronic spreadsheet document, wherein the thumbnail representations of the enlarged content items provide a reference relating to a location of the content items in the electronic spreadsheet document;
receiving a selection of one of the thumbnail representations; and
navigating to the location of the selected thumbnail representation in the electronic spreadsheet document.

3. The method of claim 2, in response to receiving a first gesture directed to the electronic spreadsheet document, automatically navigating to and displaying a second spreadsheet application user interface mode.

4. The method of claim 2, wherein automatically navigating to and displaying a second content level of the electronic spreadsheet document includes displaying a plurality of thumbnail representations of a plurality of spreadsheet documents associated with the first content level of the electronic spreadsheet document.

5. The method of claim 4, further comprising displaying in association with each displayed thumbnail representations, information about an electronic spreadsheet document corresponding to each displayed thumbnail representation.

6. The method of claim 5, wherein displaying information about an electronic spreadsheet document includes displaying information about one or more changes made to any of the electronic spreadsheet documents corresponding to each displayed thumbnail representation.

7. The method of claim 6, wherein displaying information about one or more changes made to any of the electronic spreadsheet documents corresponding to each displayed thumbnail representation includes displaying information showing locations of the one or more changes made to any of the electronic spreadsheet documents corresponding to each displayed thumbnail representation.

8. The method of claim 2, wherein automatically navigating to and displaying a second content level of the electronic spreadsheet document includes displaying one or more content items contained in the electronic spreadsheet document in an enlarged display for providing a visual indication of a navigation point in the electronic spreadsheet document.

9. The method of claim 2, wherein navigating to and displaying a second content level of the electronic spreadsheet document includes displaying a visualization of one or more formula dependencies contained in the electronic spreadsheet document.

10. A computer readable medium containing computer executable instructions which when executed by a computer perform a method of spreadsheet navigation; comprising:
displaying a first spreadsheet application (115) user interface mode;
displaying a first content level of an electronic spreadsheet document (210) in association with the first spreadsheet application user interface mode;
receiving a first gesture directed to the electronic spreadsheet document;
automatically navigating to and displaying a second content level of the electronic spreadsheet document, the second content level of the electronic spreadsheet document displaying thumbnail representations of enlarged content items overlaid on a zoomed out view of the electronic spreadsheet document, wherein the thumbnail representations of the enlarged content items provide a reference relating to a location of the content items in the electronic spreadsheet document;
receiving a selection of one of the thumbnail representations; and
navigating to the location of the selected thumbnail representation in the electronic spreadsheet document.

## Patentansprüche

1. System für das Navigieren in einer Tabellenkalkulation, umfassend:
einen oder mehrere Prozessoren (1502), und
einen Speicher (1504), der mit dem einen oder den mehreren Prozessoren gekoppelt ist,
wobei der eine oder die mehreren Prozessoren betriebsfähig sind zum:
Anzeigen eines elektronischen Tabellenkalkulationsdokuments (210) über einen ersten Tabellenkalkulationsanwendung (115)-Benutzerschnittstellenmodus,
Anzeigen einer ersten Inhaltsebene eines elektronischen Tabellenkalkulationsdokuments in Assoziation mit dem ersten Tabellenkalkulationsanwendung-Benutzerschnittstellenmodus,
Empfangen einer ersten Geste an dem elektronischen Tabellenkalkulationsdokument,
automatisches Navigieren zu und Anzeigen einer zweiten Inhaltsebene des elektronischen Tabellenkalkulationsdokuments, wobei die zweite Inhaltsebene des elektronischen Tabellenkalkulationsdokuments Thumbnail-Darstellungen von vergrößerten Inhaltselementen in einer Überlagerung mit einer herausgezoomten Ansicht des elektronischen Tabellenkalkulationsdokuments anzeigt, wobei die Thumbnail-Darstellungen der vergrößerten Inhaltselemente eine Referenz in Bezug auf die Position der Inhaltselemente in dem elektronischen Tabellenkalkulationsdokument vorsehen,
Empfangen einer Auswahl einer der Thumbnail-Darstellungen, und
Navigieren zu der Position der ausgewählten Thumbnail-Darstellung in dem elektronischen Tabellenkalkulationsdokument.

2. Verfahren für das Navigieren in einer Tabellenkalkulation, umfassend:
Anzeigen eines ersten Tabellenkalkulationsanwendung (115)-Benutzerschnittstellenmodus,
Anzeigen einer ersten Inhaltsebene eines elektronischen Tabellenkalkulationsdokuments (210) in Assoziation mit dem ersten Tabellenkalkulationsanwendung-Benutzerschnittstellenmodus,
Empfangen einer ersten Geste, die auf das elektronische Tabellenkalkulationsdokument gerichtet ist,
automatisches Navigieren zu und Anzeigen einer zweiten Inhaltsebene des elektronischen Tabellenkalkulationsdokuments, wobei die zweite Inhaltsebene des elektronischen Tabellenkalkulationsdokuments Thumbnail-Darstellungen von vergrößerten Inhaltselementen in einer Überlagerung mit einer herausgezoomten Ansicht des elektronischen Tabellenkalkulationsdokuments anzeigt, wobei die Thumbnail-Darstellungen der vergrößerten Inhaltselemente eine Referenz in Bezug auf die Position der Inhaltselemente in dem elektronischen Tabellenkalkulationsdokument vorsehen,
Empfangen einer Auswahl einer der Thumbnail-Darstellungen, und
Navigieren zu der Position der ausgewählten Thumbnail-Darstellung in dem elektronischen Tabellenkalkulationsdokument.

3. Verfahren nach Anspruch 2, das, in Reaktion auf das Empfangen einer ersten Geste, die auf das elektronische Tabellenkalkulationsdokument gerichtet ist, das automatische Navigieren zu und Anzeigen eines zweiten Tabellenkalkulationsanwendung-Benutzerschnittstellenmodus umfasst.

4. Verfahren nach Anspruch 2, wobei das automatische Navigieren zu und Anzeigen einer zweiten Inhaltsebene des elektronischen Tabellenkalkulationsdokuments das Anzeigen einer Vielzahl von Thumbnail-Darstellungen einer Vielzahl von Tabellenkalkulationsdokumenten, die mit der ersten Inhaltsebene des elektronischen Tabellenkalkulationsdokuments assoziiert sind, umfasst.

5. Verfahren nach Anspruch 4, das weiterhin das Anzeigen, in Assoziation mit jeder der angezeigten Thumbnail-Darstellungen, von Informationen zu einem elektronischen Tabellenkalkulationsdokument in Entsprechung zu jeder angezeigten Thumbnail-Darstellung umfasst.

6. Verfahren nach Anspruch 5, wobei das Anzeigen von Informationen zu einem elektronischen Tabellenkalkulationsdokument das Anzeigen von Informationen zu einer oder mehreren Änderungen an den elektronischen Tabellenkalkulationsdokumenten in Entsprechung zu jeder angezeigten Thumbnail-Darstellung umfasst.

7. Verfahren nach Anspruch 8, wobei das Anzeigen von Informationen zu einer oder mehreren Änderungen an einem der elektronischen Tabellenkalkulationsdokumente in Entsprechung zu jeder der angezeigten Thumbnail-Darstellungen das Anzeigen von Informationen, die die Positionen der einen oder der mehreren Änderungen an den elektronischen Tabellenkalkulationsdokumenten in Entsprechung zu jeder angezeigten Thumbnail-Darstellung angeben, umfasst.

8. Verfahren nach Anspruch 2, wobei das automatische Navigieren zu und Anzeigen einer zweiten Inhaltsebene des elektronischen Tabellenkalkulationsdokuments das Anzeigen eines oder mehrerer Inhaltselemente in dem elektronischen Tabellenkalkulationsdokument in einer vergrößerten Anzeige für das Vorsehen einer visuellen Angabe eines Navigationspunkts in dem elektronischen Tabellenkalkulationsdokument umfasst.

9. Verfahren nach Anspruch 2, wobei das Navigieren zu und Anzeigen einer zweiten Inhaltsebene des elektronischen Tabellenkalkulationsdokuments das Anzeigen einer Visualisierung einer oder mehrerer Formelabhängigkeiten in dem elektronischen Tabellenkalkulationsdokument umfasst.

10. Computerlesbares Medium mit darin enthaltenen computerausführbaren Befehlen, die bei einer Ausführung durch einen Computer ein Verfahren für das Navigieren in einer Tabellenkalkulation durchführen, das umfasst:
Anzeigen eines ersten Tabellenkalkulationsanwendung (115)-Benutzerschnittstellenmodus,
Anzeigen einer ersten Inhaltsebene eines elektronischen Tabellenkalkulationsdokuments (210) in Assoziation mit dem ersten Tabellenkalkulationsanwendung-Benutzerschnittstellenmodus,
Empfangen einer ersten Geste, die auf das elektronische Tabellenkalkulationsdokument gerichtet ist,
automatisches Navigieren zu und Anzeigen einer zweiten Inhaltsebene des elektronischen Tabellenkalkulationsdokuments, wobei die zweite Inhaltsebene des elektronischen Tabellenkalkulationsdokuments Thumnail-Darstellungen von vergrößerten Inhaltselementen in einer Überlagerung mit einer herausgezoomten Ansicht des elektronischen Tabellenkalkulationsdokuments anzeigt, wobei die Thumbnail-Darstellungen der vergrößerten Inhaltselemente eine Referenz in Bezug auf die Position der Inhaltselemente in dem elektronischen Tabellenkalkulationsdokument vorsehen,
Empfangen einer Auswahl einer der Thumbnail-Darstellungen, und
Navigieren zu der Position der ausgewählten Thumbnail-Darstellung in dem elektronischen Tabellenkalkulationsdokument.

## Revendications

1. Système destiné à une navigation dans une feuille de calcul, comprenant :
un ou plusieurs processeurs (1502), et
une mémoire (1504) couplée à ce ou à ces processeurs, le ou les processeurs pouvant être mis en oeuvre pour :
afficher un document de feuille de calcul électronique (210) par l'intermédiaire d'un premier mode d'interface utilisateur de tableur (115),
afficher un premier niveau de contenu d'un document de feuille de calcul électronique en association avec le premier mode d'interface utilisateur de tableur,
recevoir une première gestuelle sur le document de feuille de calcul électronique,
naviguer automatiquement vers un second niveau de contenu du document de feuille de calcul électronique et afficher celui-ci, le second niveau de contenu du document de feuille de calcul électronique affichant des représentations en vignette d'éléments agrandis du contenu superposées sur une vue agrandie du document de feuille de calcul électronique, les représentations en vignette des éléments agrandis du contenu fournissant une référence se rapportant à l'emplacement des éléments de contenu dans le document de feuille de calcul électronique,
recevoir une sélection concernant l'une des représentations en vignette, et
naviguer jusqu'à l'emplacement de la représentation en vignette sélectionnée dans le document de feuille de calcul électronique.

2. Procédé de navigation dans une feuille de calcul comprenant :
l'affichage d'un premier mode d'interface utilisateur de tableur (115),
l'affichage d'un premier niveau de contenu d'un document de feuille de calcul électronique (210) en association avec le premier mode d'interface utilisateur de tableur,
la réception d'une première gestuelle dirigée vers le document de feuille de calcul électronique,
la navigation automatique vers un second niveau de contenu du document de feuille de calcul électronique et l'affichage de celui-ci, le second niveau de contenu du document de feuille de calcul électronique affichant des représentations en vignette d'éléments agrandis du contenu superposées sur une vue agrandie du document de feuille de calcul électronique, les représentations en vignette des éléments agrandis du contenu fournissant une référence se rapportant à l'emplacement des éléments de contenu dans le document de feuille de calcul électronique,
la réception d'une sélection concernant l'une des représentations en vignette, et
la navigation jusqu'à l'emplacement de la représentation en vignette sélectionnée dans le document de feuille de calcul électronique.

3. Procédé selon la revendication 2, comprenant, en réponse à la réception d'une première gestuelle dirigée vers le document de feuille de calcul électronique, la navigation automatique vers un second mode d'interface utilisateur de tableur et l'affichage de celui-ci.

4. Procédé selon la revendication 2, dans lequel la navigation automatique vers un second niveau de contenu du document de feuille de calcul électronique et l'affichage de celui-ci inclut l'affichage d'une pluralité de représentations en vignette d'une pluralité de documents de feuilles de calcul associés au premier niveau de contenu du document de feuille de calcul électronique.

5. Procédé selon la revendication 4, comprenant l'affichage, en association avec chaque représentation en vignette affichée, d'informations concernant un document de feuille de calcul électronique correspondant à chaque représentation en vignette affichée.

6. Procédé selon la revendication 5, dans lequel l'affichage d'informations concernant le document de feuille de calcul électronique inclut l'affichage d'informations concernant un ou plusieurs changements réalisés sur l'un quelconque des documents de feuilles de calcul électroniques correspondant à chaque représentation en vignette affichée.

7. Procédé selon la revendication 6, dans lequel l'affichage d'informations concernant un ou plusieurs changements réalisés sur l'un quelconque des documents de feuilles de calcul électroniques correspondant à chaque représentation en vignette affichée inclut l'affichage d'informations montrant les emplacements du ou des changements réalisés sur l'un quelconque des documents de feuilles de calcul électroniques correspondant à chaque représentation en vignette affichée.

8. Procédé selon la revendication 2, dans lequel la navigation automatique vers un second niveau de contenu du document de feuille de calcul électronique et l'affichage de celui-ci inclut l'affichage d'un ou plusieurs éléments de contenu se trouvant dans le document de feuille de calcul électronique dans un affichage agrandi pour fournir une indication visuelle d'un point de navigation dans le document de feuille de calcul électronique.

9. Procédé selon la revendication 2, dans lequel la navigation vers un second niveau de contenu du document de feuille de calcul électronique et l'affichage de celui-ci inclut l'affichage d'une visualisation d'une ou plusieurs dépendances de formules contenues dans le document de feuille de calcul électronique.

10. Support pouvant être lu par ordinateur contenant des instructions exécutables par ordinateur qui, lorsqu'elles sont exécutées par un ordinateur, réalisent un procédé de navigation dans une feuille de calcul, comprenant :
l'affichage d'un premier mode d'interface utilisateur de tableur (115),
l'affichage d'un premier niveau de contenu d'un document de feuille de calcul électronique (210) en association avec le premier mode d'interface utilisateur de tableur,
la réception d'une première gestuelle dirigée vers le document de feuille de calcul électronique,
la navigation automatique vers un second niveau de contenu du document de feuille de calcul électronique et l'affichage de celui-ci, le second niveau de contenu du document de feuille de calcul électronique affichant des représentations en vignette d'éléments agrandis du contenu superposées sur une vue agrandie du document de feuille de calcul électronique, les représentations en vignette des éléments agrandis du contenu fournissant une référence se rapportant à l'emplacement des éléments de contenu dans le document de feuille de calcul électronique,
la réception d'une sélection concernant l'une des représentations en vignette, et
la navigation jusqu'à l'emplacement de la représentation en vignette sélectionnée dans le document de feuille de calcul électronique.
